Europäisches Patentamt

European Patent Office

Office européen des brevets

(11) Numéro de publication : **0 435 718 B1**

(12)

# FASCICULE DE BREVET EUROPEEN

(45) Date de publication du fascicule du brevet :
**27.09.95 Bulletin 95/39**

(51) Int. Cl.⁶ : **G06F 9/28,** G06F 9/38

(21) Numéro de dépôt : **90403496.4**

(22) Date de dépôt : **07.12.90**

(54) **Processeur à plusieurs unités microprogrammées avec mécanisme d'exécution anticipée des instructions.**

(30) Priorité : **21.12.89 FR 8916952**

(43) Date de publication de la demande :
**03.07.91 Bulletin 91/27**

(45) Mention de la délivrance du brevet :
**27.09.95 Bulletin 95/39**

(84) Etats contractants désignés :
**DE ES FR GB IT NL**

(56) Documents cités :
**EP-A- 0 131 658**
**IEEE TRANSACTIONS ON COMPUTERS, vol.
C-27, no. 3, mars 1978, pages 270-275, IEEE,
New York, US; L.C. HIGBIE: "Overlapped operation with microprogramming"**
**IEEE TRANSACTIONS ON COMPUTERS, vol.
C-22, no. 2, février 1973, pages 149-153, IEEE,
New York, US; J.L. ROSENFELD et al.:
"Micromultiprocessing: An approach to multiprocessing at the level of very small tasks"**

(73) Titulaire : **BULL S.A.
Tour BULL,
1, place Carpeaux
F-92800 Puteaux (FR)**

(72) Inventeur : **Bernard, Christian
121 avenue de Malakoff
F-75764 Paris Cédex 16 (FR)**
Inventeur : **Obrebska, Monika
121 avenue de Malakoff
F-75764 Paris Cédex 16 (FR)**
Inventeur : **Vallet, Philippe
121 avenue de Malakoff
F-75764 Paris Cédex 16 (FR)**

(74) Mandataire : **Colombe, Michel et al
Direction de la Propriété Intellectuelle BULL
SA
Poste courrier:LV 59C18
68 route de Versailles
F-78430 Louveciennes (FR)**

## Description

L'invention se situe dans le domaine des systèmes informatiques et concerne un mode de réalisation particulier de processeurs utilisables dans ces systèmes.

Habituellement, un système informatique est constitué d'un sous-système central pouvant communiquer avec un ou plusieurs sous-systèmes périphériques. Le sous-système central est composé d'un ou de plusieurs processeurs reliés, par exemple par l'intermédiaire d'un bus, à une mémoire centrale et à une ou plusieurs unités d'entrée-sortie. Les unités d'entrée-sortie permettent les communications entre le sous-système central et les sous-systèmes périphériques.

Chaque processeur a pour fonction l'exécution des instructions des programmes contenus dans la mémoire centrale. Pour cela, un processeur comporte des moyens d'adressage de la mémoire pour accéder aux instructions et aux données nécessaires au traitement. Pour diminuer le temps d'accès moyen à ces instructions et à ces données, les processeurs sont habituellement munis d'une antémémoire (souvent appelée "mémoire cache") servant de tampon entre la mémoire centrale et les circuits de traitement du processeur.

Pour les petits systèmes, avec la technologie "VLSI" actuelle, les circuits de traitement du processeur peuvent être intégrés dans un seul circuit intégré. Par contre, pour des processeurs plus puissants, malgré la constante augmentation de la densité d'intégration, les circuits d'un même processeur doivent être répartis sur plusieurs circuits intégrés. Pour cela, le processeur est subdivisé en plusieurs unités fonctionnelles qui correspondent chacunes à un ou plusieurs circuits intégrés. Ainsi, chaque circuit intégré du processeur peut constituer une unité de traitement spécialisée qui contribue à l'exécution de l'ensemble des instructions machine exécutables par le processeur. Bien entendu, chaque unité de traitement doit pouvoir communiquer avec la mémoire centrale par l'intermédiaire de l'antémémoire. De plus, selon le découpage fonctionnel choisi, on doit prévoir des liaisons spécifiques permettant des communications entre ces unités.

Parmi l'ensemble des circuits de traitement contenus dans les diverses unités du processeur, on distingue habituellement une partie commande, souvent appelée "bloc de commande", une partie traitement qui est généralement appelée "chemin de données". Le bloc de commande pilote les circuits d'adressage et le chemin de données en fonction des instructions reçues. Les circuits d'adressage commandent l'antémémoire pour piloter le transfert des instructions et des opérandes vers les circuits de traitement et le transfert des résultats élaborés par ces circuits vers l'antémémoire.

Dans le cas des processeurs ayant un jeu d'instructions important, on a généralement recours à la technique de la microprogrammation pour réaliser le bloc de commande. Le bloc de commande est alors essentiellement constitué d'un microséquenceur câblé associé à une mémoire de microprogramme. En fonction du code opératoire de l'instruction à exécuter et de l'état logique du processeur, le microséquenceur exécute, généralement à chaque cycle, un adressage de la mémoire du microprogramme. La mémoire fournit en sortie des mots de microprogramme qui déclenchent l'envoi de signaux de commande aux différents circuits. Bien entendu, le bloc de commande peut aussi inclure des circuits entièrement câblés, notamment pour exécuter plus rapidement certaines fonctions que l'on souhaite optimiser.

Une solution habituelle pour réaliser le bloc de commande microprogrammé d'un processeur consiste à prévoir une unité spécialisée pour cette fonction. Le bloc de commande est alors entièrement contenu dans cette unité qui peut être réalisée sous la forme d'un circuit intégré, généralement associé à une ou plusieurs mémoires de microprogramme externes. Pour illustrer ce genre de bloc de commande, on peut citer la demande de brevet européen déposée sous le n° 85 113207.6, publiée sous le n° EP-A-178671 le 23 avril 1986 et ayant pour titre "Distributed Control Store Architecture".

Avec cette solution, chaque unité de traitement est commandée de façon centralisée par le bloc de commande. Il en résulte que chaque unité contribue à chaque instant à l'exécution d'une même microinstruction. Or, nous avons vu que les différentes unités de traitement du processeur correspondent à une partition de l'ensemble des fonctions du processeur.

Par exemple, une première unité sera affectée à la fonction adressage, une autre unité aux traitements logiques et arithmétiques binaires et décimaux, une troisième unité aux opérations en virgule flottante. Avec ce genre de découpage fonctionnel, l'exécution d'une instruction, c'est-à-dire d'un microprogramme associé, n'implique généralement pas le fonctionnement simultané effectif de ces trois unités. Par exemple, si l'instruction consiste à additionner un opérande contenu en mémoire au contenu d'un registre du processeur et à ranger le résultat dans ce registre, son exécution comprend les étapes suivantes :

1) calcul de l'adresse réelle de l'opérande à partir de l'adresse logique définie par l'instruction ;
2) adressage de la mémoire, chargement de l'opérande dans l'unité de calcul et exécution de l'opération ;
3) écriture du résultat dans le registre.

Selon cet exemple, on voit que seule l'unité d'adressage est utilisée pendant l'étape 1, seule l'unité de calcul est utilisée pendant les étapes 2 et 3. Ainsi, lorsqu'une unité travaille, les autres sont inactives, ce qui ne constitue pas une utilisation optimale du matériel.

L'article dans IEEE TRANSACTIONS ON COMPUTERS, vol. C-27, no. 3, mars 1978, pages 270-275; L.C. HIGBIE : "Overlapped Operation with Microprogramming", qui constitue l'état de la technique le plus proche, montre un processeur formé d'unités fonctionnelles pouvant fonctionner en parallèle sur le même flot d'instructions, chacune étant microprogrammée.

Chaque instruction est traitée complètement par une unité qui lui correspond. Chaque instruction comprend des bits d'attente (wait bits) correspondant chacun à une unité donnée, et qui sont positionnés quand l'unité devant exécuter l'instruction doit attendre que ladite unité donnée ait terminé l'instruction en cours. De plus des bits d'occupation (busy bits) sont positionnés par chaque unité lorsqu'elle est en cours d'opération. Un circuit logique adéquat assure dans chaque unité l'avancement du microprogramme quand le produit logique du bit d'attente et du bit d'occupation de chacune des autres unités est nul, assurant ainsi la synchronisation nécessaire entre les unités.

Aussi, l'invention a pour but de remédier à ces inconvénients en proposant un processeur à plusieurs unités de traitement microprogrammées pouvant fonctionner avec un maximum d'autonomie de façon à pouvoir optimiser l'utilisation de ces unités et notamment pour permettre un fonctionnement de type pipe-line selon lequel plusieurs unités exécutent simultanément des microprogrammes d'exécution d'instructions différentes.

Cependant, l'absence de centralisation du bloc de commande doit être compensée par un mécanisme de synchronisation des microprogrammes des différentes unités de sorte qu'ils s'exécutent dans un ordre déterminé de façon à bien réaliser les fonctions précises qui correspondent aux instructions. La résolution de ce problème fait l'objet de la demande de brevet EP-A-0 434 483 et ayant pour titre "Processeur à plusieurs unités de traitement microprogrammées".

Dans ce contexte de processeur à plusieurs unités microprogrammées, la mise en oeuvre d'un fonctionnement de type pipeline nécessite que chaque unité soit capable de détecter le début et la fin de chaque instruction et de déterminer à chaque instant si elle peut exécuter son microprogramme correspondant à l'exécution de l'instruction suivante.

Dans ce but l'invention a pour objet un processeur pour système de traitement de données comportant une pluralité d'unités de traitement microprogrammées se répartissant l'ensemble des fonctions dudit processeur, chaque unité étant affectée à l'exécution d'un sous-ensemble de fonctions dudit processeur, lesdites unités étant reliées à des moyens de mémorisation contenant les instructions des programmes à exécuter et les opérandes, l'une au moins desdites unités étant une unité d'adressage desdits moyens de mémorisation pour l'obtention des instructions et des opérandes, lesdites unités comportant leur propre bloc de commande pour l'exécution de microprogrammes spécifiques, ledit processeur étant caractérisé en ce que chaque instruction est composée de plusieurs microprogrammes exécutables respectivement dans lesdites unités, en ce que le bloc de commande de chaque unité comporte des moyens de commande d'instructions pour déclencher l'exécution du microprogramme de la première instruction en attente, en ce que la dernière microinstruction de chacun desdits microprogrammes comporte une indication de fin de microprogramme, en ce que certaines unités et notamment l'unité d'adressage comportent des moyens d'anticipation et contiennent des microprogrammes dont la dernière microinstruction comporte une indication d'anticipation pour signaler si l'instruction suivante à exécuter est anticipable et en ce que les moyens d'anticipation conditionnent lesdits moyens de commande pour autoriser l'exécution du microprogramme de ladite instruction en attente lorsque la microinstruction en cours d'exécution comporte lesdites indications de fin de microprogramme et d'anticipation.

Bien entendu, l'indication d'anticipation doit être prévue dès la conception des microprogrammes en tenant compte de certaines règles de microprogrammation liées au découpage fonctionnel choisi. Par exemple, si une instruction se termine dans une unité donnée, la dernière microinstruction du microprogramme correspondant dans cette unité ne devra pas contenir l'indicateur d'anticipation. En d'autres termes, cela veut dire que l'instruction suivante n'est pas anticipable. Il en sera de même des unités dont on exclut la possibilité de fonctionner de façon anticipée.

Pour améliorer la performance, il est avantageux de limiter le nombre de cas imposant à l'avance que l'instruction suivante n'est pas anticipable.

Dans ce but et selon un mode de réalisation préféré de l'invention, le processeur est en outre caractérisé en ce qu'il comprend des moyens permettant auxdites unités de s'échanger des signaux de fin de microprogramme en réponse auxdites indications de fin de microprogramme, en ce que chaque unité comprend un circuit de détection de fin d'instruction fournissant un signal de fin d'instruction en fonction desdits signaux de fin de microprogramme, en ce que chaque unité comprend un circuit d'inhibition qui, lorsqu'il est dans son état actif, empêche toute modification de l'état logique de l'unité, en ce que ledit circuit d'inhibition est notamment rendu actif lorsque les conditions suivantes sont réunies :

- l'indication d'anticipation est absente,
- l'indication de fin de microprogramme est présente,

- le signal de fin d'instruction est absent,

l'instruction en attente étant alors dite "exécutable" si l'indication de fin de microprogramme est présente alors que le circuit d'inhibition est inactif.

Selon un autre aspect de réalisation de l'invention, le processeur est caractérisé en ce que chaque unité munie de moyens d'anticipation comporte un indicateur d'état anticipé prenant initialement une première valeur déterminée et signalant pour une deuxième valeur déterminée que l'instruction en cours dans ladite unité est exécutée en anticipé, c'est-à-dire que son exécution a démarré avant la fin de l'instruction précédente, en ce que lesdites unités comportent un circuit détecteur de fin effective d'instruction fournissant un signal de fin effective d'instruction lorsque les conditions suivantes sont réunies :

- le signal de fin d'instruction est présent,
- ladite unité est dans un état anticipé ou bien l'instruction en attente dans ladite unité est l'instruction suivante à exécuter,

en ce que ledit indicateur d'état anticipé est placé à ladite deuxième valeur déterminée lorsque les conditions suivantes sont réunies :

- l'instruction en attente est exécutable,
- l'indication d'anticipation est présente,
- le signal de fin effective d'instruction est absent,

et en ce que le circuit d'inhibition est rendu actif lorsque les conditions suivantes sont remplies simultanément :

- l'indication de fin de microprogramme est présente,
- l'indication d'anticipation est absente,
- l'indicateur d'état anticipé possède ladite seconde valeur déterminée.

Pour certains types d'instructions exécutables par le processeur, il y a potentiellement une dépendance entre l'instruction qui se termine et l'instruction suivante susceptible d'être exécutée en anticipé dans une unité donnée. Une telle dépendance existe par exemple dans le cas où l'instruction suivante est une instruction de branchement conditionnel alors que les paramètres permettant le calcul de la condition de branchement de cette instruction peuvent être modifiés par une des instructions précédentes non encore terminées.

Pour résoudre ce problème et selon un autre aspect de réalisation de l'invention, le processeur est caractérisé en ce que l'unité d'adressage comporte des circuits de détection de dépendance fournissant un signal de dépendance lorsque l'instruction en attente doit utiliser des informations susceptibles d'être modifiées par une instruction qui n'est pas encore terminée dans au moins une des unités autre que l'unité d'adressage, en ce que ledit signal de dépendance conditionne l'activation du circuit d'inhibition, et en ce que l'activation du circuit d'inhibition est supprimée lorsque ledit signal de dépendance disparaît.

D'autres caractéristiques et détails de réalisation de l'invention seront exposés dans la suite de la description en relation avec les figures :

- la figure 1 représente un système informatique comportant le processeur selon l'invention ;
- la figure 2 représente une antémémoire et ses circuits interfaces avec les unités de traitement du processeur selon un mode de réalisation préféré de l'invention ;
- la figure 3 représente de façon schématique une unité de traitement du processeur selon l'invention ;
- la figure 4 représente les principaux signaux échangés entre les unités de traitement et avec l'antémémoire ;
- la figure 5 illustre le fonctionnement en deux phases des circuits des unités de traitement ;
- la figure 6 représente les principaux éléments d'un bloc de commande d'une unité de traitement pour la mise en oeuvre de l'invention ;
- la figure 7 représente le circuit de synchronisation de chaque unité de traitement ;
- les figures 8 et 9 représentent respectivement quelques détails de circuit de l'unité d'adressage et de l'unité de calcul binaire et décimal ;
- la figure 10 représente les moyens de commande d'instructions d'une unité pouvant fonctionner en mode anticipé ;
- la figure 11 représente un circuit de l'unité d'adressage pour la détection et la gestion des conditions de dépendance.

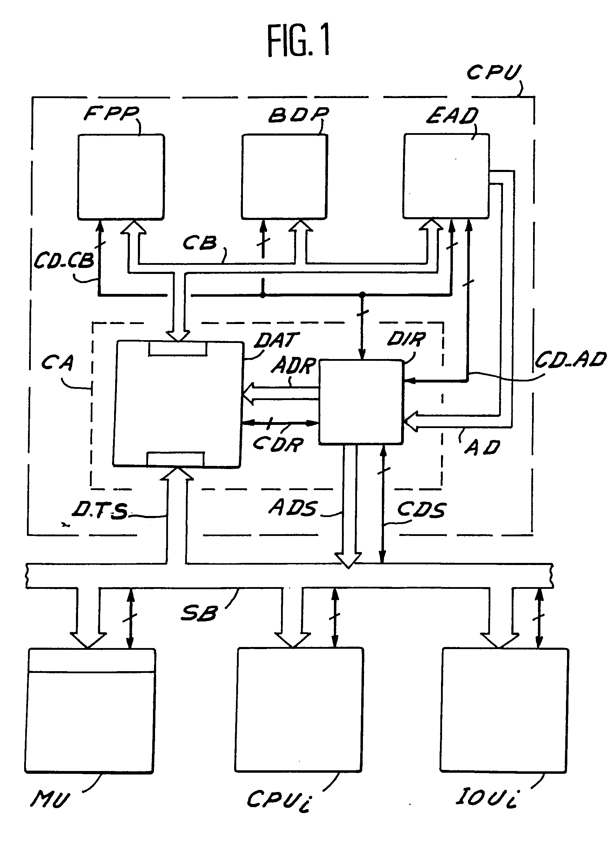

Le système de la figure 1 est composé de plusieurs processeurs CPU, CPU$_i$ reliés à un bus système SB de façon à pouvoir communiquer entre eux et avec une mémoire centrale MU et des unités d'entrée-sortie IOU$_i$. Le nombre de processeurs CPU$_i$ et d'unités d'entrée-sortie IOU$_i$ peut être variable, de même que le nombre de modules mémoire constituant la mémoire centrale MU. Tous ces éléments forment ce que l'on appelle le sous-système central d'un système informatique pouvant communiquer avec un ou plusieurs sous-systèmes périphériques (non représentés) par l'intermédiaire des unités d'entrée-sortie IOU$_i$.

La figure 1 représente de façon plus détaillée les principaux composants d'un des processeurs CPU. Ce processeur est relié au bus système SB par l'intermédiaire d'une antémémoire CA (souvent appelée mémoire "cache") servant de tampon entre la mémoire principale MU et des unités d'exécution EAD, BDP, FPP du processeur. L'antémémoire CA est composée essentiellement de circuits mémoire DAT de capacité inférieure à la mémoire centrale MU et d'un contrôleur DIR pour gérer les interfaces avec, d'une part, le bus système SB et, d'autre part, les unités d'exécution. Ces unités et le contrôleur peuvent être réalisés sous la forme de circuits intégrés VLSI.

Les circuits mémoire DAT échangent les données avec le bus système SB par l'intermédiaire de lignes de données DTS. Le contrôleur DIR communique avec le bus SB par les lignes d'adresse ADS et les lignes de commande CDS.

A titre d'exemple de réalisation non limitatif, une des unités d'exécution EAD est spécifiquement affectée aux opérations d'adressage en particulier pour l'obtention des instructions et des opérandes à partir de l'antémémoire CA. L'unité EAD est alors reliée au contrôleur DIR par des lignes d'adresse AD véhiculant les signaux d'adresse réelle calculée. L'unité EAD et le contrôleur DIR sont également reliés entre eux par des signaux de contrôle d'adressage CD-AD. Ces signaux d'adresse et de contrôle sont pris en compte par le contrôleur DIR pour commander à son tour les circuits mémoire DAT par l'intermédiaire de lignes d'adresse ADR et de lignes de contrôle interne CDR. En réponse à ces informations, les circuits de mémoire DAT peuvent échanger les instructions, les opérandes et les résultats avec les unités d'exécution EAD, BDP, FPP par l'intermédiaire de lignes CB.

Comme le processeur selon l'invention possède des unités d'exécution pouvant exécuter de façon autonome leur propre microprogramme, ces unités sont reliées entre elles et avec le contrôleur DIR par l'intermédiaire de lignes de contrôle CD-CB de façon à permettre la synchronisation et la cohérence des opérations exécutées dans ces unités.

Selon l'exemple représenté, l'exécution est confiée à trois unités se répartissant les fonctions suivantes :

- traduction des adresses virtuelles en adresses réelles et adressage de l'antémémoire pour EAD ;
- calculs binaires et décimaux pour BDP ;
- calculs en virgule flottante (calculs scientifiques) pour FPP.

Il convient de noter que l'invention ne se limite pas à ce découpage fonctionnel particulier. D'autre part, pour des raisons de clarté, la figure 1 ne représente pas les circuits d'horloge ni les dispositifs de maintenance associés.

En dehors du rôle particulier des informations et signaux que les unités échangent entre elles et avec l'antémémoire, le système de la figure 1 se comporte comme un système classique. Il est donc inutile de décrire les aspects connus de son fonctionnement pour se consacrer dans la suite de la description aux aspects directement liés à l'invention.

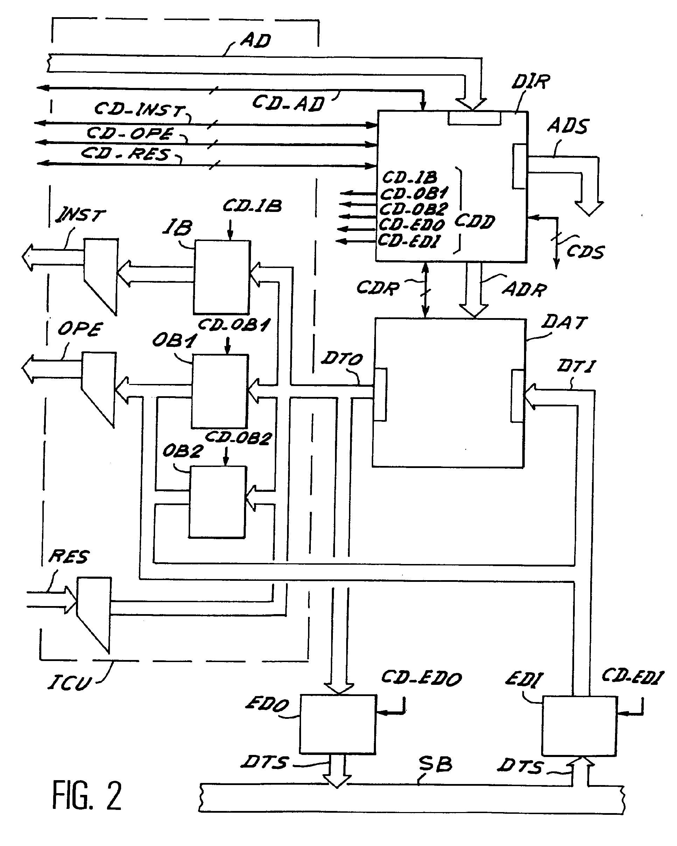

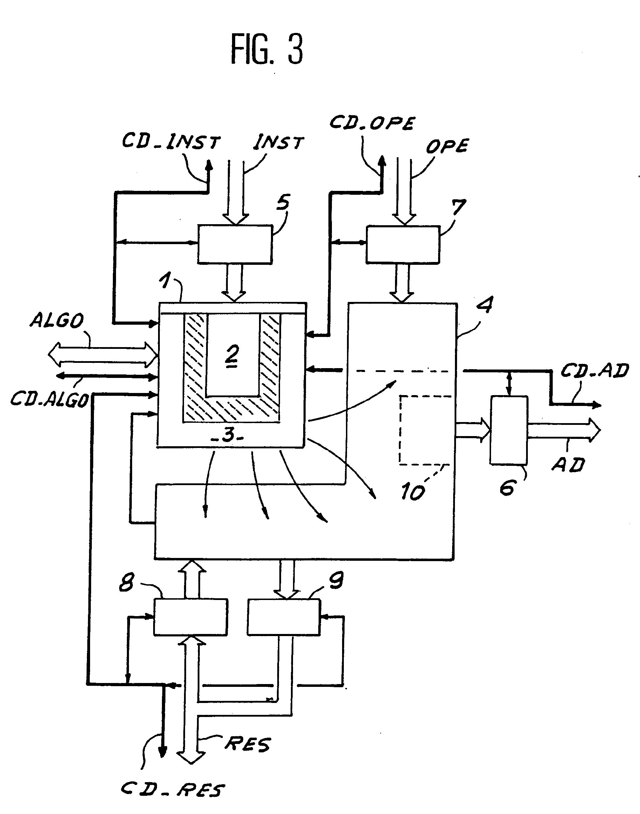

Le mode de réalisation qui va être décrit se concrétise tout d'abord par les interfaces particulières de l'antémémoire et les interfaces correspondantes des unités ainsi que par les liaisons associées. Ces éléments vont être décrits en référence aux figures 2 et 3.

La figure 2 représente l'antémémoire CA où nous retrouvons le contrôleur DIR relié à EAD par les lignes AD et CD-AD ainsi que les circuits mémoire DAT. L'antémémoire CA communique avec les trois unités d'exécution par l'intermédiaire d'un ensemble de circuits d'interface ICU créant trois bus INST, OPE, RES auxquels sont reliées les trois unités d'exécution et les lignes de contrôle associées, respectivement, CD-INST, CD-OPE, CD-RES.

Le bus INST est affecté au transfert d'instructions entre la mémoire DAT et les unités. La sortie DTO de la mémoire DAT est reliée au bus INST par l'intermédiaire d'un tampon d'instructions IB et d'un circuit de décadrage.

Les bus OPE et RES sont affectés respectivement aux transferts des opérandes et des résultats. Ces bus sont reliés respectivement à la sortie DTO et à l'entrée DTI de la mémoire DAT par l'intermédiaire de tampons OB1 et OB2 et de circuits de décadrage. Les tampons IB, OB1, OB2 peuvent être chargés à partir de la mémoire DAT en réponse aux commandes de lecture CDR du contrôleur DIR. Enfin l'entrée DTI et la sortie DTO de la mémoire DAT sont reliées aux lignes de donnée DTS du bus système SB respectivement par un tampon d'entrée EDI et un tampon de sortie EDO.

Les tampons IB, OB1, OB2, EDO, EDI sont commandés respectivement par les signaux CD-IB, CD-OB1, CD-OB2, CD-EDO et CD-EDI délivrés par le contrôleur DIR. Ces signaux servent à sélectionner en lecture ou en écriture les différents registres de ces tampons lors des transferts de données vers ou à partir de la mémoire DAT, et vers ou à partir des unités d'exécution.

Le fonctionnement de l'antémémoire pour les opérations internes et vis-à-vis du bus système SB est en grande partie classique. On peut toutefois rappeler que les informations d'adresse et les commandes associées fournies par l'unité d'adressage EAD sont prises en compte par le contrôleur DIR pour rechercher dans une mémoire associative interne (appelée répertoire ou "directory") si les données correspondant à l'adresse reçue sont bien présentes dans la mémoire DAT. Si c'est le cas, le contrôleur DIR adresse directement la mémoire DAT et commande les opérations de lecture ou d'écriture. Dans le cas contraire ("MISS") le contrôleur déclenche une opération de lecture dans la mémoire centrale MU au moyen de signaux d'adresse et de commande transmis respectivement par les lignes ADS et CDS du bus SB. Une fois la mise à jour de la mémoire DAT terminée, les échanges de données avec les unités de traitement reprennent normalement.

Il est à noter que ces opérations de mise à jour sont invisibles pour les unités de traitement. Elles se traduisent simplement par la présence d'un signal d'occupation BUSY envoyé par le contrôleur DIR aux unités de traitement.

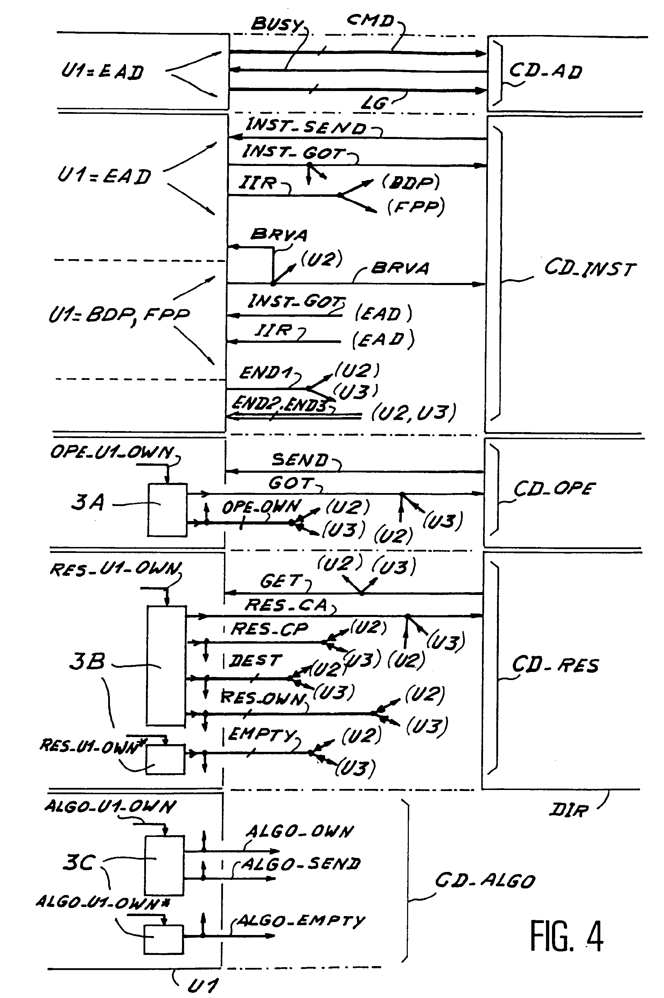

Des aspects particuliers de réalisation liés à l'invention concernent les échanges entre l'antémémoire et les unités de traitement. Des explications à ce sujet seront données en référence à la figure 4 mais auparavant il est utile de décrire l'organisation des unités d'exécution.

La figure 3 représente de façon schématique, les principaux sous-ensembles constituant l'unité d'adressage EAD. Nous retrouvons les liaisons AD, INST, OPE, RES mentionnées précédemment. Ces liaisons sont reliées à l'unité par l'intermédiaire de tampons référencés respectivement 6, 5, 7, 8 et 9 servant à emmagasiner temporairement les adresses, les instructions, les opérandes, les résultats reçus et les résultats à émettre que l'unité échange avec l'antémémoire ou avec les autres unités.

Comme toute unité microprogrammée, elle peut être subdivisée en deux grandes parties : une partie contrôle ou bloc de commande 1 et une partie opérative ou chemin de données 4.

Le bloc de commande 1 comprend une partie d'exécution des microprogrammes 2 associée à une partie câblée 3 qui coopèrent entre elles pour gérer l'exécution des instructions reçues et, d'une façon générale, pour effectuer des opérations "système" spécifiquement confiées au micrologiciel et au matériel.

Le chemin de données 4 est constitué typiquement des opérateurs câblés et des registres, visibles ou non du logiciel, nécessaires à l'exécution des instructions. Ces ressources sont contrôlées au moyen d'une multitude de signaux issus du bloc de commande 1.

Le bloc de commande 1 est d'autre part relié à un bus supplémentaire appelé canal algorithmique ALGO sur lequel sont branchées les autres unités. Ce bus qui est associé à des lignes de commande CD-ALGO fera l'objet d'explications ultérieures.

Les autres unités d'exécution BDP, FPP ont une organisation analogue à l'unité d'adressage représentée à la figure 3. Les unités BDP et FPP se distinguent évidemment de l'unité d'adressage EAD par l'absence de l'interface d'adressage 6 reliée aux lignes AD et CD-AD. D'autre part, seule unité EAD possède dans sa partie opérative les circuits spécifiques 10 de calculs d'adresse réelle. Compte tenu de leurs fonctions différentes, les trois unités contiennent des microprogrammes différents et chacune possède des moyens de décodage des microfonctions spécifiques correspondantes.

Selon l'exemple décrit, l'ensemble des fonctions du processeur est réparti sur les trois unités EAD, BDP, FPP de la façon suivante :

- EAD est affectée au développement d'adresse permettant de calculer les adresses virtuelles en fonction du champ d'adresse des instructions reçues. Elle traduit ces adresses virtuelles en adresses réelles et transmet les commandes et les adresses réelles à l'antémémoire. Ces opérations déclenchent le chargement simultané des instructions par le bus INST dans les trois unités ou bien l'envoi des opérandes sur le bus OPE aux unités qui en ont besoin. De même, EAD participe par sa fonction adressage aux opérations d'écriture en mémoire des résultats élaborés par les autres unités et transmis sur le bus RES. Une autre fonction importante est la gestion des instructions à charger. Pour exécuter ces fonctions, le chemin de données 4 comporte des registres de base BR, des registres généraux GR, des compteurs d'instructions IC et un certain nombre de registres de travail. Il est prévu également un premier additionneur pour calculer l'adresse virtuelle à partir du contenu des registres de base, du contenu d'un des registres généraux et d'une valeur de déplacement fournie par l'instruction en cours d'exécution. Un second additionneur est particulièrement affecté aux mises à jour des compteurs d'instructions. Le chemin de données est enfin muni d'un circuit pour accélérer la traduction des adresses virtuelles en adresses réelles.

- L'unité BDP est une unité de calcul binaire et décimal comportant également des registres généraux et des registres de travail ainsi que certains opérateurs spécialisés tels que additionneur binaire, multiplieur, opérateur booléen, décaleur, additionneur décimal. Ces ressources peuvent servir à effectuer des opérations binaires décimales définies par les instructions à exécuter mais aussi à sous-traiter à la demande de l'unité d'adressage EAD certains calculs auxiliaires, tels que les calculs d'index, pour effectuer l'adressage ou les calculs des conditions de branchement dans le cas d'instructions de branchement conditionnel.

- L'unité FPP est une unité de calcul scientifique permettant les opérations d'addition, soustraction, multiplication, division portant sur des opérandes formatées en virgule flottante. Son chemin de données comporte des registres scientifiques et de travail de grande capacité ainsi que des opérateurs performant affectés aux calculs susmentionnés. Bien entendu, l'unité FPP comporte également des moyens pour transformer la représentation binaire des nombres en représentation flottante et réciproquement. L'unité FPP sera donc en mesure d'exécuter des instructions de type scientifique et on pourra prévoir également qu'elle sous-traite à la demande de l'unité BDP certaines opérations telles que les divisions ou les multiplications complexes.

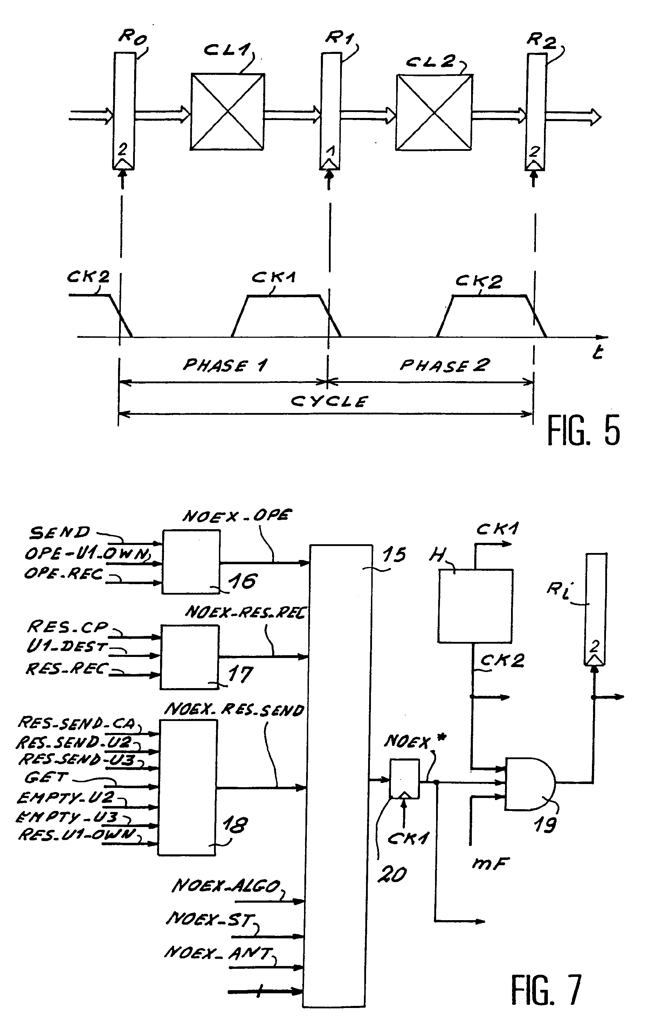

Comme chaque unité est microprogrammée de façon à pouvoir exécuter de façon autonome des microprogrammes spécifiques correspondant aux instructions à exécuter, chaque bloc de commande comporte sa propre mémoire de microprogramme, son propre microséquenceur ainsi qu'un ensemble de circuits logiques associés. Tous ces éléments seront décrits plus en détails à la figure 5.

Cette microprogrammation répartie dans plusieurs unités nécessite des moyens pour synchroniser les microprogrammes qui sont exécutés simultanément dans les trois unités. Cette synchronisation est mise en oeuvre grâce aux lignes de contrôle CD-INST, CD-OPE, CD-RES et CD-ALGO. Les définitions détaillées de ces liaisons et leurs fonctions vont être maintenant décrites en référence à la figure 4.

Nous retrouvons sur la partie droite de la figure les interfaces du contrôleur DIR associées aux lignes CD-AD, CD-INST, CD-OPE et CD-RES. La partie gauche de la figure représente les interfaces correspondantes d'une des unités d'exécution U1 auxquelles s'ajoute l'interface de contrôle CD-ALGO associée au canal algorithmique ALGO. Pour ne pas compliquer la figure, une seule unité U1 est représentée, étant entendu que cette unité peut être EAD, BDP ou FPP. Par convention, les autres unités sont référencées U2 et U3. Etant donné cependant le rôle particulier de l'unité EAD, certaines parties de son interface seront spécifiques de cette unité (U1 = EAD), tandis que d'autres seront spécifiques des autres unités (U1 = BDP/FPP).

Les opérations d'adressage de la mémoire DAT commandées par EAD utilisent les lignes CD-AD qui comportent les lignes de commande CMD permettant à EAD l'envoi de signaux de commande correspondants. Les signaux de commande CMD servent à initialiser certaines opérations ou accès mémoire exécutables par l'antémémoire. L'ensemble des commandes pour ces opérations peut être codé sur plusieurs bits véhiculés par plusieurs lignes de CMD. Comme commandes à prévoir, on peut citer la commande de lecture d'instructions (CIIR) ou d'opérandes (IOR), la commande d'écriture d'opérandes (IOW), des commandes de suspension d'opérations et de reprise d'opérations qui avaient été suspendues. Ces lignes de commande sont associées à des lignes d'indication de longueur LG pour indiquer à l'antémémoire, en complément de l'adresse, le nombre d'octets concernés par une commande de lecture ou d'écriture. D'autres lignes servent à véhiculer des signaux complémentaires, tel qu'un signal de validation d'adresse, un signal de terminaison, ou un signal de validation des commandes (non représentés) ainsi que le signal d'occupation BUSY émis par DIR pour signaler à EAD si l'antémémoire est prête ou non à exécuter des commandes par exemple en cas de rechargement à partir de la mémoire centrale suite à un "MISS".

Parmi les signaux CD-INST associés au bus intruction INST, certains ne concernent que l'unité d'adressage EAD : INST-SEND émis par DIR pour signaler à EAD que l'antémémoire envoie une instruction, INST-GOT émis par EAD pour signaler à l'antémémoire qu'une instruction envoyée précédemment a été effectivement reçue, IIR pour signaler aux autres unités BDP, FPP qu'une commande de lecture d'instructions CIIR a été envoyée à l'antémémoire. Une ligne de validation de branchement BRVA relie les trois unités et le contrôleur entre eux. Un signal BRVA peut être émis (dans le cas d'une instruction de branchement) par l'une des unités BDP ou FPP pour indiquer aux deux autres unités et au contrôleur DIR si un branchement conditionnel est effectif ou non. Le signal BRVA est utilisé par les unités réceptrices et le contrôleur pour valider les signaux d'initialisation de lecture d'instruction CIIR, IIR émis par l'unité d'adressage EAD. Les trois unités sont enfin reliées entre elles par trois lignes de fin d'exécution d'instruction END1, END2, END3. Par ces lignes, les unités U1, U2, U3 peuvent émettre vers les deux autres unités respectivement les signaux END1, END2, END3 signalant qu'elles exécutent la dernière microinstruction du microprogramme d'exécution de l'instruction en cours. Nous décrirons plus loin comment ces signaux vont servir dans chaque unité à synchroniser l'exécution des instructions.

Les lignes de contrôle CD-OPE associées au bus opérande OPE comportent une ligne de notification d'émission d'opérande SEND permettant au contrôleur DIR de signaler aux trois unités qu'il émet un opérande sur le bus OPE. D'autre part, les trois unités et le contrôleur DIR sont reliés entre eux par une ligne d'accusé de réception GOT qui permet à chaque unité d'envoyer à DIR un signal d'accusé de réception en réponse au signal d'émission SEND. Le signal GOT est émis par l'unité destinataire de l'opérande. Pour assurer la cohérence des transferts, l'unité réceptrice ne peut émettre effectivement le signal GOT que si elle est propriétaire du bus OPE (concrétisée par l'état logique d'une bascule OPE-U1-OWN).

Un bus de transfert de propriété OPE-OWN relie les trois unités entre elles pour permettre à l'unité propriétaire du bus opérande d'indiquer le nouveau propriétaire de ce bus. Lorsqu'un changement de propriétaire doit se produire (situation prévue dans le microprogramme de l'unité propriétaire, en fonction de paramètres d'état), l'unité propriétaire émet sur OPE-OWN des signaux codés en fonction de l'identité de la nouvelle unité propriétaire. Ces signaux sont reçus par les deux autres unités et l'unité réceptrice qui se reconnaît comme étant la nouvelle propriétaire du bus opérande (par décodage de ces signaux) mémorise cette situation (OPE-U1-OWN mis à 1), ce qui l'autorise alors à émettre les signaux d'accusé de réception GOT et les signaux de propriété OPE-OWN. En résumé, les signaux CD-OPE mettent en oeuvre un mécanisme de propriété de réception des opérandes.

Contrairement au bus opérande, le bus résultat RES est géré par un mécanisme de propriété d'émission. La propriété du bus résultat se concrétise dans chaque unité par l'état logique d'une bascule de propriété RES-U1-OWN dont l'état logique autorise ou interdit à l'unité l'émission d'un résultat.

La mise en oeuvre de ce mécanisme utilise les lignes de contrôle CD-RES définies de la façon suivante. Une ligne de disponibilité GET de l'antémémoire relie le contrôleur DIR aux trois unités et lui sert à émettre un signal de disponibilité signifiant que l'un au moins de ses tampons OB1 ou OB2 sont vides. De façon analogue, des liaisons EMPTY relient les trois unités entre elles pour permettre aux unités qui ne sont pas propriétaires du bus résultat (RES-U1-OWN = 0) d'informer les autres unités et en particulier l'unité propriétaire du bus résultat qu'elles sont prêtes à recevoir un résultat, c'est-à-dire que leur tampon d'entrée des résultats 8 (figure 3) est vide. Une ligne de type bus RES-CA de notification d'émission de résultat relie les trois unités et le contrôleur DIR entre eux. La ligne RES-CA permet au propriétaire du bus résultat d'envoyer un signal d'émission de résultat pour informer le contrôleur DIR qu'un résultat destiné à l'antémémoire est émis. Les trois unités sont d'autre part reliées entre elles par une autre ligne de type bus RES-CP de notification d'émission de résultat d'une unité vers une autre unité. Cette ligne RES-CP est associée à un bus de destinataire DEST reliant également les trois unités entre elles. Le bus DEST permet de véhiculer un signal codé permettant d'identifier le destinataire du résultat dont l'envoi est signalé par RES-CP. L'envoi de signaux sur les lignes RES-CA, RES-CP, DEST est conditionné par l'état de la bascule de propriété RES-U1-OWN. L'état RES-U1-OWN conditionne également l'envoi de signaux de changement de propriété sur un bus de transfert de propriété RES-OWN du bus résultat. Le bus RES-OWN relie les trois unités entre elles et est utilisé de façon analogue au bus OPE-OWN décrit précédemment.

Le canal algorithmique ALGO est utilisé pour les échanges d'informations de branchements des microprogrammes. Ce canal trouve son utilité du fait que des microinstructions de branchement sont utilisés dans les microprogrammes des unités alors que les conditions de branchement sont déterminées par une seule de ces unités. Il est donc nécessaire que l'unité qui détermine le branchement effectif en informe les autres unités, ce qui peut être réalisé au moyen de ce canal spécifique.

Le mécanisme de propriété d'émission est également utilisé pour le canal algorithmique ALGO. Le propriétaire du canal ALGO (ALGO-U1-OWN = 1) est autorisé à émettre des signaux de branchement du microprogramme et la présence d'un tel envoi est signalé par un signal d'émission de condition de branchement sur les lignes ALGO-SEND reliant entre elles les unités susceptibles d'utiliser ces informations. Cet envoi est conditionné par un signal de disponibilité du destinataire émis sur les lignes ALGO-EMPTY. Bien entendu, seules les unités non propriétaires (ALGO-U1-OWN = 0) du canal algorithmique sont autorisées à émettre ce signal de disponibilité. Enfin, comme pour le bus opérande et le bus résultat, la propriété du canal algorithmique peut être modifiée par son propriétaire (ALGO-U1-OWN = 1) par les lignes de transfert de propriété ALGO-OWN reliant les unités entre elles. Dans le cas simplifié où seules les unités EAD et BDP ont besoin d'échanger ces informations, ALGO-SEND, ALGO-OWN et ALGO-EMPTY sont constitués chacuns par une seule ligne.

Grâce aux signaux précédemment décrits que les unités et l'antémémoire peuvent s'échanger, chaque unité est en mesure de gérer de façon autonome l'exécution des instructions reçues. Bien entendu, les microprogrammes chargés dans les différentes unités doivent être conçues en tenant compte de ces mécanismes. D'autre part, il faut prévoir dans la partie câblée 3 du bloc de commande, des circuits de synchronisation capables d'intervenir dans l'exécution du microprogramme en fonction de ces signaux.

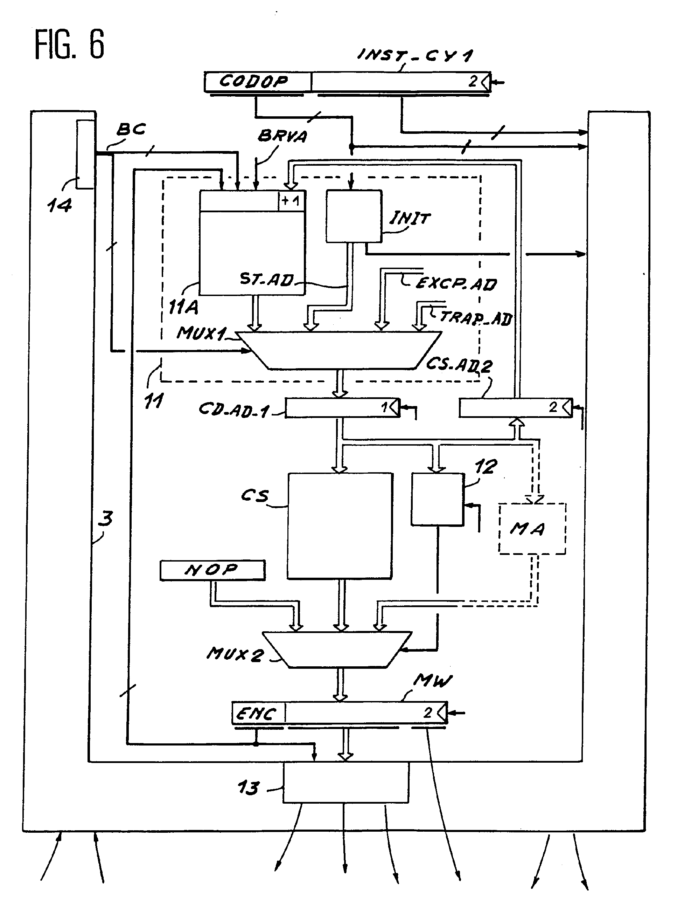

Avant de décrire ces circuits de synchronisation, il convient de rappeler à l'aide des figures 5 et 6 les éléments essentiels de la partie microprogrammée du bloc de commande.

La figure 5 représente de façon schématique le principe de séquencement des opérations de l'ensemble du processeur et en particulier du bloc de commande de chaque unité. Ce séquencement est réalisé au moyen de signaux d'horloge CK1 et CK2 définissant deux phases successives PHASE 1 et PHASE 2, un cycle étant défini comme la succession d'une phase 1 et d'une phase 2. Comme cela apparaît sur la figure 5, les circuits d'une unité peuvent être représentés fonctionnellement comme un montage en cascade de registres R0, R1, R2 et de circuits logiques ou combinatoires de type CL1 ou CL2 évalués respectivement en phase 1 ou en phase 2. Les sorties d'un circuit logique de type CL1 sont reliées aux l'entrées d'un circuit logique aval de type CL2 par l'intermédiaire d'un registre synchronisé par le signal d'horloge CK1 correspondant à la phase 1 active. De même, les sorties d'un circuit de type CL2 sont reliées aux entrées d'un autre circuit aval de type CL1 (non représenté) par l'intermédiaire d'un registre R2 synchronisé par CK2. Ainsi, pour la partie de circuit représentée à titre d'illustration, le circuit CL1 est actif pendant la phase 1 et opère sur les signaux d'entrée contenus dans le registre R0 chargé pendant la phase 2 précédente. Le circuit aval CL2 est actif pendant la phase 2 suivante et opère sur le contenu du registre R1 chargé pendant la phase 1 précédente et son résultat est chargé dans le registre R2 synchronisé par le signal d'horloge CK2.

La partie microprogrammée de la figure 6 est constituée essentiellement d'un microséquenceur 11 dont la sortie est reliée à l'entrée du registre d'adresse de microinstruction CS-AD-I synchronisé par CK1. La sortie de ce registre est reliée à l'entrée d'une mémoire de microprogramme CS. Le registre CS-AD-1 est également relié à l'entrée d'un registre CS-AD-2 synchronisé par CK2. Ce registre sert à contenir l'adresse de la microinstruction en cours d'exécution. La sortie de la mémoire CS est reliée par l'intermédiaire d'un multiplexeur MUX2 à l'entrée d'un registre MW synchronisé par CK2 et servant à contenir le mot de microprogramme (ou microinstruction) fourni normalement par la mémoire CS. La sortie du registre MW est reliée à la partie câblée 3 du bloc de commande et en particulier au décodeur 13. Le champ d'enchaînement ENC du registre MW contient sous forme codée la microfonction d'enchaînement associée à chaque microinstruction. Les lignes de sortie du registre MW qui correspondent au champ d'enchaînement ENC sont reliées au circuit 11A du microséquenseur 11 pour le calcul d'adresse de la microinstruction suivante. Le circuit 11A est aussi relié en entrée à la sortie du registre CS-AD-2. Enfin, le circuit 11A reçoit du sous-ensemble 14 de la partie câblée 3 des signaux BC représentatifs des conditions de branchement du microprogramme, notamment les signaux issus du bus ALGO. Ces conditions sont évaluées en phase 2 en fonction de paramètres internes et externes. Le circuit 11A reçoit également le signal de validation de branchement BRVA provenant d'une autre unité.

Un registre d'instruction courante INST-CY1 synchronisé par CK2 contient l'instruction en cours d'exécution. Sa sortie est reliée à la partie câblée 3 et à l'entrée d'un circuit d'initialisation INIT, généralement réalisé au moyen d'une mémoire morte. Le circuit INIT fournit, en fonction du code opératoire CODOP de l'instruction, l'adresse de la première microinstruction du microprogramme d'exécution de l'instruction.

Un multiplexeur MUX1 à plusieurs entrées constitue l'étage de sortie du microséquenseur 11. Une première entrée est reliée à la sortie du circuit 11A et une seconde entrée est reliée à la sortie du circuit INIT. Le multiplexeur MUX1 reçoit également en entrée des signaux d'adresses particulières de microprogramme tels que EXCP-AD ou TRAP-AD permettant des déroutements du microprogramme en cas d'exceptions (EXCP) ou d'évènements spéciaux (TRAP). Sous la commande de signaux de branchement évalués en phase 2 par la partie câblée 3, le multiplexeur MUX1 sélectionne au cours de la phase 1 suivante, l'adresse de la microinstruction à exécuter. Il peut s'agir de la première microinstruction de l'instruction, d'une microinstruction de déroutement ou de la microinstruction définie par le circuit 11A lors du déroulement normal du microprogramme.

La sortie du registre d'adresse de microinstruction CS-AD-1 peut également être reliée à une mémoire externe auxiliaire MA servant à étendre la capacité de la mémoire de microprogramme CS. Dans ce cas, l'adresse de microprogramme est appliquée à un circuit 12 permettant de détecter si la microinstruction correspondante est contenue ou non dans la mémoire interne CS. D'autre part, la sortie de la mémoire auxiliaire MA est appliquée à une des entrées du multiplexeur MUX2. Ce multiplexeur MUX2 est commandé par le circuit 12 de façon à sélectionner la sortie de la mémoire interne CS ou celle de la mémoire auxiliaire MA. La mémoire auxiliaire MA peut être une mémoire supplémentaire associée à l'unité ou éventuellement la mémoire centrale du système dont une zone est réservée aux microprogrammes.

Une autre entrée du multiplexeur MUX2 peut recevoir une microinstruction câblée NOP dont l'exécution ne modifie pas l'état logique de l'unité. L'instruction NOP est activée lorsqu'il faut maintenir l'unité en attente, par exemple dans le cas où l'accès à la mémoire auxiliaire nécessite un nombre de cycles supérieur à celui pour accéder à la mémoire interne.

La microinstruction contenue dans le registre MW fournit des signaux au reste de l'unité par l'intermédiaire d'un décodeur de microinstruction 13 de façon à piloter l'ensemble des ressources de cette unité et à produire les signaux échangés avec l'extérieur. C'est au niveau de ce décodage que sont notamment produits les signaux d'attribution et de changement de propriété qui ont été prévus par microprogrammation.

En particulier, la première microinstruction d'exécution d'une instruction détermine de cette façon chacunes des unités propriétaires des bus OPE, RES et ALGO.

Le bloc de commande de la figure 6 étant en grande partie de type classique, son fonctionnement est bien connu de l'homme du métier. Il est donc inutile de développer tous les détails de son fonctionnement. Nous pouvons toutefois rappeler que toute nouvelle instruction chargée en phase 2 dans le registre d'instruction INST-CY1 est décodée par le circuit d'initialisation INIT qui fournit en phase 1 suivante l'adresse de la première microinstruction. En fonction de cette adresse, la mémoire du microprogramme CS fournit en phase 2 suivante la première microinstruction MW d'où sont dérivés les signaux de commande des ressources de l'unité. Pendant cette même phase 2, l'adresse de cette microinstruction est chargée dans le registre CS-AD-2 pour permettre à l'unité 11A de calculer l'adresse de la microinstruction suivante en fonction des signaux de branchement BC élaborés pendant cette phase.

Du point de vue séquencement, on peut remarquer que le calcul de l'adresse d'une microinstruction est effectuée en phase 1 correspondant à une phase "lecture" tandis que l'accès à la microinstruction dans la mémoire CS a lieu en phase 2 correspondant à une phase "exécution". Durant cette même phase "exécution", le registre CS-AD-2 se charge avec l'adresse contenue dans le registre CS-AD-1 pour préparer le microséquenceur au calcul de l'adresse de la microinstruction suivante. Il en résulte que si le signal d'horloge CK2 d'exécution de la phase 2 est inhibé, tous les signaux fournis au microséquenceur conservent leur état logique car les registres synchronisés par CK2 ne sont pas modifiés.

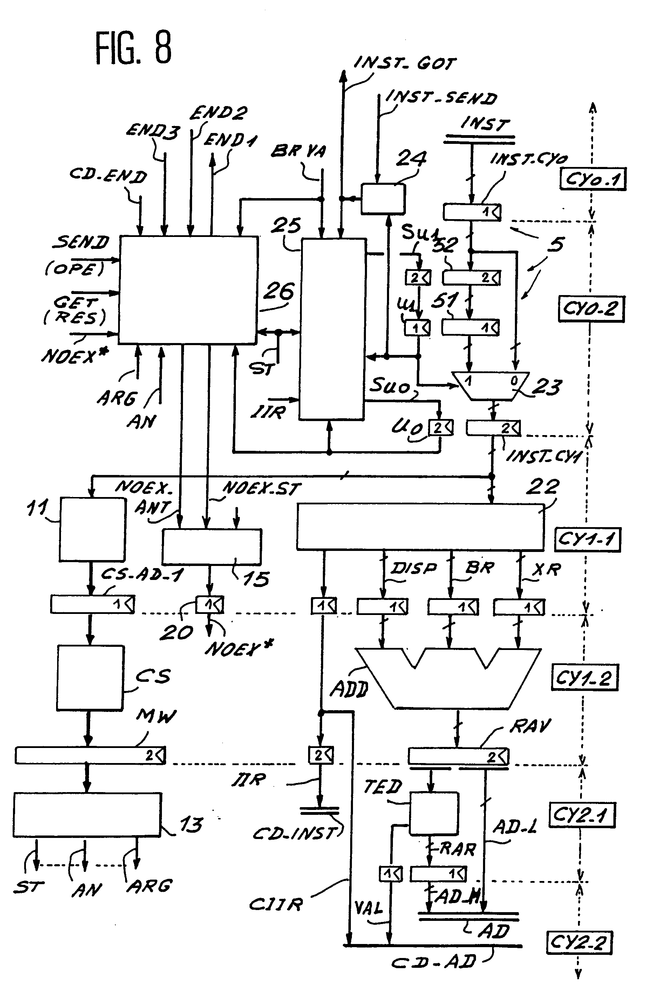

La remarque qui précède va maintenant nous permettre d'exposer les moyens pouvant être mis en oeuvre pour réaliser la synchronisation des microprogrammes. Pour cela nous allons considérer la figure 7 qui représente le circuit réalisant cette synchronisation.

Sur cette figure est représenté un des registres $R_i$ synchronisé par CK2. Ce registre est commandé par une porte ET 19 à trois entrées recevant le signal d'horloge CK2, un signal de microcommande mf engendré par le décodeur 13 en fonction de la microinstruction MW. La troisième entrée de la porte ET 19 reçoit un signal (NOEX*) issu d'une bascule 20. Cette bascule 20 est chargée en phase 1 par un signal fourni par un ensemble de circuits logiques 15, 16, 17, 18.

Les signaux d'entrée des circuits 16, 17, 18 qui ont déjà été introduits au cours de la description de la figure 4 ne vont pas être expliqués à nouveau. Il convient cependant de remarquer qu'ils doivent être évalués en phase 1 d'un cycle.

Les signaux OPE-REC, RES-REC, RES-SEND obtenus par décodage de la microinstruction en cours d'exécution prennent la valeur 1 logique lorsque, respectivement, l'unité attend un opérande (OPE-REC), l'unité attend un résultat (RES-REC), l'unité veut émettre un résultat (RES-SEND).

Le circuit logique 15 qui joue un rôle de circuit d'inhibition de l'unité réalise la fonction NON-OU ("NOR") appliquée à une pluralité de signaux qui définissent chacuns une condition de non-exécution de la microinstruction en cours. En particulier, il reçoit les signaux de sortie des circuits 16, 17 et 18 qui vont maintenant être décrits.

Le signal NOEX-OPE fourni par le circuit logique 16 correspond à la condition de non-exécution se produisant dans le cas où l'unité attend un opérande (OPE-REC = 1) alors que l'antémémoire ne signale pas l'envoi d'un opérande (SEND = 0), ou bien alors que l'unité n'est pas propriétaire du bus opérande (OPE-U1-OWN = 0), ce qui se résume par l'équation logique suivante :

$$NOEX - OPE = (OPE - REC).[SEND * + (OPE - U1 - OWN) *],$$

où le symbole * signifie qu'il s'agit du complément de la variable logique (avec la convention de logique positive).

Un signal NOEX-RES-REC fourni par le circuit logique 17 correspond à la condition de non-exécution qui est imposée dans le cas où l'unité U1 attend un résultat (RES-REC = 1) alors que l'envoi de ce résultat par une autre unité n'est pas signalé (RES-CP = 0) ou alors que l'unité ne se reconnaît pas destinataire du résultat envoyé (U1-DEST = 0). L'équation logique

correspondante sera :

$$NOEX - RES - REC = (RES - REC).[(RES - CP) * + (U1 - DEST) *].$$

Le signal NOEX-RES-SEND fourni par le circuit logique 18 correspond aux cas de non-exécution suivants :

1) l'unité U1 doit envoyer un résultat à l'antémémoire ou à une autre unité (RES-SEND-CA ou RES-SEND-U2 ou RES-SEND-U3 = 1) alors que l'unité U1 n'est pas propriétaire du bus résultat (RES-U1-OWN = 0),

2) l'unité U1 doit émettre un résultat à l'antémémoire (RES-SEND-CA = 1) alors que l'antémémoire n'est pas prête à recevoir le résultat (GET = 0),

3) l'unité U1 doit émettre un résultat vers l'une des autres unités U2 ou U3 (RES-SEND-U2 ou RES-SEND-U3 = 1) alors que l'unité destinataire n'est pas prête à recevoir le résultat (EMPTY-U2 ou EMPTY-U3 = 0). Ces conditions se résument par l'équation logique suivante :

$$NOEX - RES - SEND = (RES - SEND - CA + RES - SEND - U2 + RES - SEND - U3).(RES - U1 - OWN) *$$
$$+ (RES - SEND - CA).GET + (RES - SEND - U2).(EMPTY - U2)$$
$$+ (RES - SEND - U3).(EMPTY - U3).$$

Le signal NOEX-ALGO correspond de façon analogue aux conditions de non exécution provoquées par l'impossibilité pour l'unité U1 d'émettre une information de branchement qu'elle doit émettre ou de recevoir une information de branchement attendue. En fonction des signaux définis à la figure 4, nous avons l'équation suivante :

$$NOEX - ALGO = (ALGO - SEND).[(ALGO - OWN) + ALGO - EMPTY]$$
$$+ (ALGO - REC).(ALGO - SEND)$$

où ALGO-REC est un signal interne à l'unité qui prend la valeur 1 logique lorsque l'unité U1 attend une information de branchement.

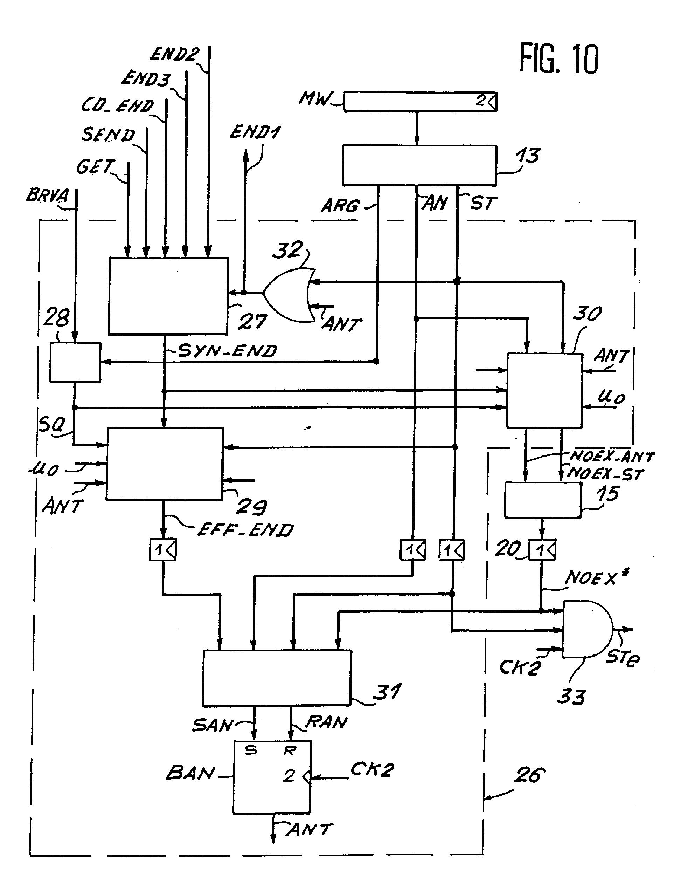

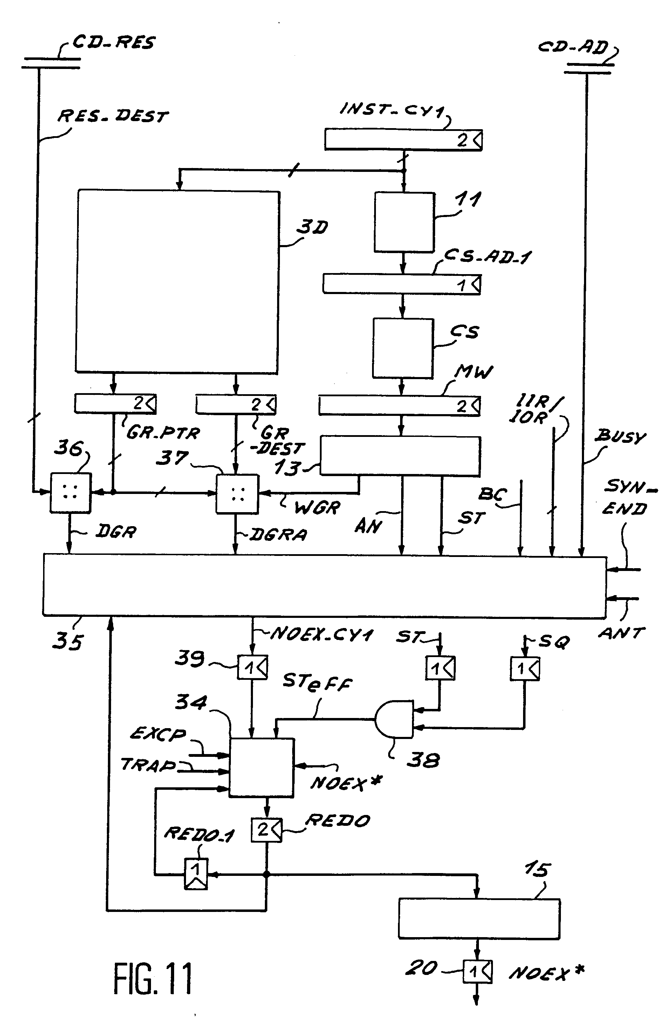

Selon l'invention telle que revendiquée, le circuit 15 reçoit d'autres signaux de non-exécution tels que NOEX-ST correspondant au cas d'impossibilité de démarrer l'exécution de l'instruction suivante ou NOEX-ANT (spécifique pour les unités munies de moyens d'anticipation) interdisant à cette unité d'exécuter l'instruction suivante en mode anticipé. Ces signaux et les circuits qui les produisent seront décrits plus loin en référence aux figures 10 et 11.

Nous allons maintenant décrire le fonctionnement d'une unité lorsque le mécanisme de synchronisation selon l'invention intervient. Pour cela nous nous reportons à la figure 6 en supposant que la phase 2 d'un cycle d'exécution vient de se terminer. L'état logique de l'unité est alors le suivant : les registres actifs en phase 2 CS-AD-2 et MW viennent d'être chargés avec de nouvelles valeurs tandis que le registre CS-AD-1 conserve la valeur qui avait été chargée durant la phase 1 précédente. En dehors du cas où une nouvelle instruction doit s'exécuter (microfonction ST décrite plus loins), le registre INST-CY1 conserve la même valeur.

Au début de la phase 1 suivante, la microinstruction MW est décodée par le décodeur 13 qui fournit en sortie un ensemble de signaux de microfonctions permettant d'activer durant cette phase ou durant la phase 2 suivante les opérateurs et les registres en fonction de la microinstruction reçue. Le signal mf appliqué en phase 2 à l'entrée de la porte 19 de la figure 7 représente, à titre d'illustration, un de ces signaux. Durant cette même phase 1, l'unité reçoit des autres unités et de l'antémémoire des signaux d'interface et en particulier ceux devant être pris en compte par le circuit de la figure 7 pour la synchronisation.

Lors de l'apparition du signal d'horloge CK1, les registres synchronisés par ce signal peuvent se charger avec leur nouvelle valeur, dans la mesure où ils sont impliqués dans l'une des microfonctions de la microinstruction. Au même instant, la bascule 20 est chargée par la valeur logique présente en sortie du circuit 15.

En l'absence d'une condition de non-exécution (NOEX* = 1), la bascule 20 prend alors l'état logique 1, ce qui a pour conséquence d'autoriser la mise à jour éventuelle des registres actifs en phase 2 lors de l'apparition du signal d'horloge suivant CK2. On dit alors que la microfonction mF est exécutable. Dans le cas contraire, la bascule 20 est à 0 et tous les registres synchronisés par CK2 sont gelés.

Cette situation persiste aussi longtemps qu'au moins une des conditions de non-exécution est présente. Si lors d'une phase 1 d'évaluation ultérieure la bascule est forcée à la valeur logique 1, signalant ainsi que toutes les conditions d'exécution sont satisfaites, l'ensemble des registres synchronisés par CK2 seront à nouveau autorisés à être modifiés durant la phase 2 suivante. Il en résulte que la phase 2 d'exécution de la microinstruction qui avait été interrompue peut s'exécuter et simultanément, la nouvelle microinstruction est chargée dans le registre MW.

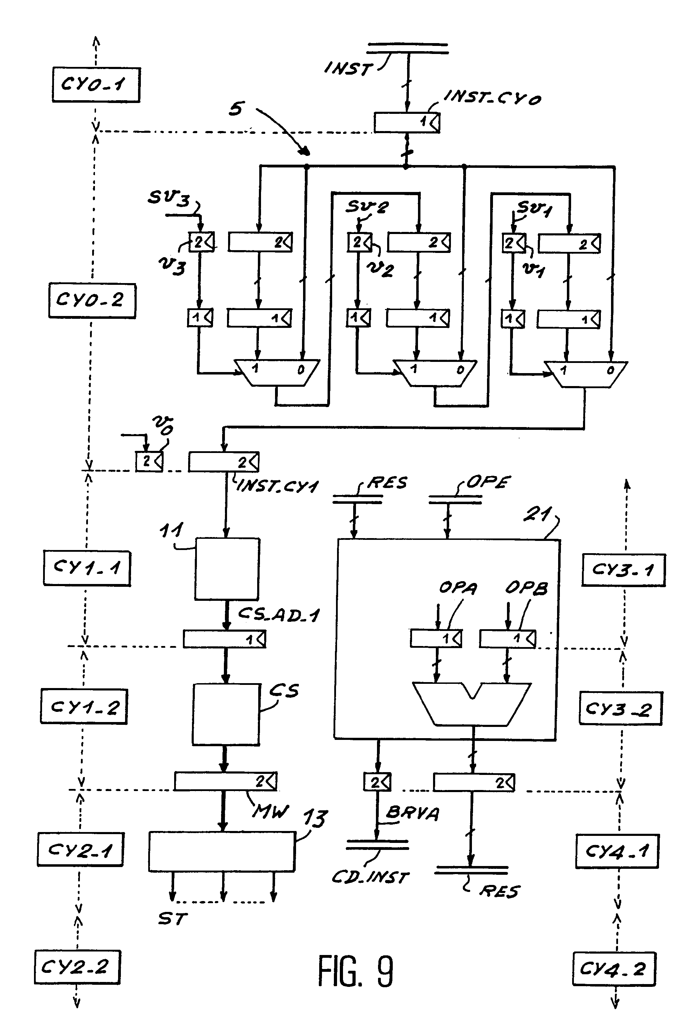

Les figures 8 et 9 représentent de façon plus détaillée certains circuits appartenant respectivement à l'unité d'adressage EAD et à l'unité de calcul BDP. Ces figures vont permettre d'expliquer l'exécution et l'enchaînement des instructions, notamment à l'aide des cycles et phases d'exécution CY0-1, CY0-2, CY1-1 etc, qui sont représentés.

Sur la figure 8, nous retrouvons le microséquenceur 11, la mémoire de microprogramme CS, le décodeur 13 et les registres CS-AD-1 et MW déjà mentionnés en référence à la figure 6. Nous retrouvons également le circuit d'inhibition 15 et la bascule de commande de non-exécution 20. En sortie du décodeur 13 sont explicités trois signaux ST, AN, ARG fournissant respectivement les indications de fin de microprogramme, d'anticipation et de branchement dans le cas d'une instruction de branchement.

La figure 8 représente d'autre part un ensemble de circuits spécifiques de l'unité d'adressage et notamment un additionneur ADD et un circuit 22 de décodage d'instruction et d'accès aux registres BR, GR de l'unité. Lorsque l'instruction INST-CY1 implique un adressage de la mémoire, cette instruction comporte l'indication d'un numéro de registre de base BR, une valeur de déplacement DISP et dans le cas d'un adressage avec indexation, l'identité d'un registre général GR. En fonction de ces informations, le circuit 22 délivre en sortie la valeur du déplacement DISP et les contenus BR, XR des registres désignés par l'instruction. Ces informations sont verrouillées en phase 1 dans des registres correspondants. Ces registres servent d'entrées à l'additionneur ADD dont la sortie fournit l'adresse virtuelle qui est chargée dans un registre RAV synchronisé par CK2. Les poids faibles AD-L du registre RAV sont envoyés à l'antémémoire par l'intermédiaire des ligne d'adresse AD tandis que les poids forts du registre RAV sont appliqués à l'entrée d'un circuit TED de traduction d'adresse qui fournit en sortie les poids forts AD-H de l'adresse réelle correspondante. Les poids forts AD-H sont chargés dans le registre RAR synchronisé par CK1. Le registre RAR est associé à une bascule recevant du circuit TED un indicateur de validité VAL de l'adresse contenue dans le registre RAR.

Lorsque l'instruction INST-CY1 implique un accès mémoire, par exemple pour le chargement d'instructions dans le cas d'une instruction de branchement, le circuit 22 fournit, en réponse au code opératoire de l'instruction, un signal d'initialisation de transfert d'instructions CIIR évalué en phase 1 et envoyé à l'antémémoire en phase 2 suivante. Des signaux d'initialisation analogues IOR, IOW (non représentés) seront également envoyés dans les cas de lecture d'opérandes ou d'écriture de résultats. Dans le cas de lecture d'instructions, un signal IIR dérivé est envoyé en phase 1 suivante aux autres unités, par l'intermédiaire d'une des lignes CD-INST.

Le registre INST-CY1 est chargé à partir du tampon d'instructions 5 constitué des registres 52 et 51 branchés en cascade et synchronisés respectivement par CK2 et CK1. Un multiplexeur 23 à deux entrées est relié en entrées respectivement à la sortie d'un registre INST-CY0 et du registre 51. L'entrée du registre INST-CY0 est reliée au bus instruction INST. Les registres 52, 51 et INST-CY1 sont associés chacun à une bascule de validité. L'état de ces bascules est commandé par un circuit logique 25 de commande du tampon d'instruction. En fonction des signaux INST-GOT, BRVA, ST, IIR, de l'état de la bascule associée au registre 51 et de l'état de la bascule u0 associée au registre INST-CY1, le circuit 25 fournit les signaux de mise à jour respectivement Su0 et Su1 des bascules u0 et u1. Cette mise à jour a lieu en phase 2 en fonction de signaux évalués en phase 1 précédente.

Ces bascules permettent d'indiquer, lorsqu'elles sont à 1, que les registres contiennent des instructions valides. La bascule associée au registre 51 commande le multiplexeur 23 de façon à mettre en communication l'entrée du registre INST-CY1 avec la sortie du registre 51 ou du registre INST-CY0 selon que son état est à 1 ou à 0.

Un circuit 24 fournit, en fonction du signal INST-SEND et de l'état de la bascule associée au registre 51, le signal INST-GOT pour signaler à l'antémémoire que l'envoi d'une instruction notifiée par INST-SEND a été effectivement chargé dans le tampon d'instruction 5.

La figure 8 représente enfin un circuit 26 de commande d'instructions qui reçoit les signaux ST, AN, ARG, END2, END3 déjà définis, ainsi qu'un signal de fin conditionnelle CD-END et les signaux SEND et GET issus de l'antémémoire. En fonction de ces signaux, le circuit 26 délivre, à destination des autres unités le signal END1 de fin de microprogramme ainsi que les signaux de non-exécution NOEX-ST et NOEX-ANT appliqués à l'entrée du circuit d'inhibition 15. Une description plus détaillée du circuit 26 sera donnée en référence à la figure 10.

De façon analogue, la figure 9 représente quelques détails de circuit de l'unité BDP. Nous retrouvons avec les mêmes références que pour EAD, les différents registres INST-CY0, INST-CY1, CS-AD-1, MW ainsi que le microséquenceur 11, la mémoire de microprogramme CS et le décodeur 13. La référence 21 correspond au chemin de donnée qui est symbolisé par un additionneur dont les entrées sont reliées à deux registres d'opérandes OPA, OPB et dont la sortie est reliée à un registre de résultat lui-même relié au bus résultat RES.

Selon l'exemple de réalisation décrit, le calcul des conditions de branchement est affecté à BDP. Par conséquent, le circuit 21 fournit, dans le cas où l'instruction exécutée est une instruction de branchement, un signal BRVA signalant si la condition de branchement est satisfaite. Le signal BRVA est évalué en fonction du type de branchement défini par l'instruction et de paramètres contenus dans un registre d'état de l'unité.

Contrairement à l'unité d'adressage, le tampon d'instruction 5 de BDP comporte un nombre plus important de registres et de multiplexeurs. Ce nombre sera fonction du nombre d'instructions que EAD peut exécuter de façon anticipée par rapport à BDP. Ainsi dans l'exemple de la figure 9, BDP pourra recevoir trois instructions en attente d'exécution, c'est-à-dire deux de plus que EAD. Comme pour EAD, les différents registres du tampon d'instruction sont associés à des bascules de validité v1, v2, v3 mises à jour respectivement par des signaux Sv1, Sv2, Sv3 issus d'un circuit de commande du tampon d'instruction non représenté. De même le registre INST-CY1 est associé à une bascule de validité v0 mise à jour par le signal Sv0 délivré par ce même circuit de commande.

Avant de décrire le fonctionnement du circuit 25 de commande du tampon d'instruction et du circuit 26 de commande d'instructions de EAD, il convient de décrire rapidement les diverses étapes d'exécution d'une instruction impliquant l'utilisation de plusieurs unités. Pour simplifier l'exposé, nous nous placerons dans le cas d'une instruction courte et où seules l'unité d'adressage EAD et l'unité de calcul interviennent. Pour cela nous allons considérer simultanément les figures 8 et 9 qui établissent la correspondance entre les étapes ou cycles CY0, CY1, CY2, CY3 et CY4 d'exécution d'une telle instruction et les parties de circuit qui sont impliquées dans cette exécution. Comme représenté, chaque cycle, par exemple CY0 est subdivisé en deux phases, par exemple CY0-1 et CY0-2 synchronisées respectivement par des signaux d'horloge CK1 et CK2.

Au cours de l'exécution d'un programme, l'antémémoire fournit en parallèle une succession d'instructions en réponse à une commande d'initialisation de lecture d'instruction CIIR déclenchée par une instruction de branchement exécutée par EAD. L'envoi par l'antémémoire d'une instruction est signalé par le signal INST-SEND accompagnant les données sur le bus instruction INST. Pendant la phase CY0-1, l'instruction est reçue simultanément dans les registres INST-CY0 des unités. Au cours de la phase suivante CY0-2, l'instruction qui vient d'être reçue est chargée dans les tampons d'instruction 5 des unités, sous réserve que ces tampons ne soient pas pleins, c'est-à-dire que la bascule de validité du registre 51 soit à 0. Si ce n'est pas le cas, le signal INST-GOT fourni par le circuit 24 est à 0, signalant ainsi à l'antémémoire que l'instruction reçue n'a pas été prise en compte par les unités, ceci ayant pour effet d'interrompre dans l'antémémoire l'envoi de l'instruction suivante. Si par contre le tampon 5 n'est pas plein, l'instruction reçue est chargée soit dans le registre 52 du tampon, ce qui provoque la mise à 1 de la bascule u1, soit dans le registre INST-CY1 dans le cas où ce registre est vide ou se libère. Au cours de la phase CY1-1 suivante, l'instruction est décodée à la fois par le microséquenceur 11 et la partie câblée 22 avec pour effet de calculer l'adresse CS-AD-1 de la première microinstruction et, par exemple, d'accéder à un registre de base BR et un registre général GR en vue d'effectuer un développement d'adresse. Dans le cas où EAD n'est pas en état anticipé, BDP effectue des opérations analogues pour la même instruction

Nous poursuivrons l'explication en prenant l'exemple d'une instruction impliquant la recherche d'un opérande en mémoire et une opération, telle qu'une addition, portant sur cet opérande et effectuée par BDP. Dans ce cas, BDP va se placer en état de non-exécution (NOEX = 1) car l'opérande est attendu.

Au cours de la phase CY1-2 suivante, le registre MW est chargé avec la microinstruction à exécuter tandis que, dans l'exemple considéré, le registre RAV reçoit l'adresse virtuelle calculée par l'additionneur ADD à partir des contenus BR et XR des registres. Pendant ce temps, EAD envoie un signal d'initialisation de lecture d'opérande vers l'antémémoire, tandis que BDP est en état de non-exécution.

Au cours de la phase CY2-1, EAD charge le registre RAR avec les poids forts AD-H de l'adresse réelle (en supposant que le circuit TED de traduction d'adresse est capable de fournir en une seule phase l'adresse réelle recherchée). Pendant cette même phase, les poids faibles AD-L de l'adresse virtuelle sont envoyés à l'antémémoire. D'autre part, BDP évalue à nouveau ses conditions d'exécution.

Au cours de la phase CY2-2 l'antémémoire prend en compte l'adresse réelle fournie par EAD tandis que BDP est toujours en état de non exécution.

Si l'antémémoire est en mesure de fournir l'opérande nécessaire à BDP durant le cycle suivant CY3-1, elle le signale aux unités par SEND et BDP est alors replacé en état d'exécution. Il en résulte que la phase CY3-2 suivante s'exécute et le résultat est chargé dans un registe correspondant.

Au cours de la phase CY4-1, le résultat calculé est envoyé sur le bus résultat RES.

Au cours de la phase CY4-2 suivante, la ou les unités destinatrices des informations calculées pendant la phase précédente effectuent la prise en compte de ces informations.

Si par contre il s'agissait d'une instruction de branchement conditionnel, c'est en fin de la phase CY1-2 de l'instruction suivante que le signal de validation de branchement de BRVA serait produit. En cas de branchement effectif (BRVA = 1), EAD continuerait son microprogramme, notamment pour calculer l'adresse de l'instruction de branchement.

Le fonctionnement qui vient d'être décrit dans un cas particulier montre que l'unité d'adressage a terminé sa contribution à l'exécution de l'instruction à la fin de la phase CY2-1. Il en résulte que le microprogramme correspondant est terminé (ici le microprogramme ne comporte qu'une seule microinstruction). Par conséquent, à la fin de la phase CY2-1, EAD serait en mesure de commencer l'exécution de l'instruction suivante. Si le programme s'exécute sans déroutement, l'instruction suivante est celle qui est présente dans le registre INST-CY1. Cette possibilité est exploitée par la présente invention en prévoyant dans la dernière microinstruction de chaque microprogramme la possibilité d'inclure une indication de fin de microprogramme et dans les cas où cela est possible une indication d'anticipation pour signaler que l'exécution de l'instruction suivante peut commencer. On peut toutefois noter dès à présent que l'exécution effective de l'instruction suivante en anticipé devra être soumise à certaines conditions qui seront développées en référence aux figures 10 et 11.

Le circuit 25 de commande du tampon d'instruction est conçu de façon à fonctionner de la façon suivante :

1) si les signaux IIR et BRVA sont présents simultanément, cela signifie que le branchement calculé par BDP est valide, c'est-à-dire que les instructions ne s'exécutent plus en séquence. Dans ce cas, le circuit 25 met à 0 les bascules u0 et u1. Il en est de même dans les autres unités ou toutes les instructions contenues dans le tampon d'instruction doivent être invalidées

2) en l'absence d'un branchement valide, si aucune nouvelle instruction n'est envoyée par l'antémémoire (INST-SEND = 0), deux cas sont à envisager :
   - si EAD ne démarre pas effectivement une nouvelle instruction, les bascules sont maintenues dans leur état ;
   - sinon, l'instruction éventuellement contenue dans le registre 51 est chargé dans le registre INST-CY1 et la bascule u1 est remise à 0 ;

3) en l'absence d'un branchement valide et si une nouvelle instruction est envoyée (INST-SEND = 1), quatre possibilités sont à envisager :
   - si le tampon est plein (u1 = 1) et si EAD ne démarre pas effectivement une nouvelle instruction, le signal INST-GOT est à 0 et les bascules sont maintenues en leur état ;
   - si le tampon est plein et si EAD entame l'exécution d'une nouvelle instruction, l'instruction reçue est chargée dans le registre 52 et la bascule u1 est maintenue à 1 ;
   - si le tampon n'est pas plein et si EAD n'entame pas l'exécution d'une nouvelle instruction, l'instruction reçue est chargée dans le registre 52, la bascule u1 associée étant mise à 1 ;
   - si le tampon n'est pas plein et si EAD entame l'exécution d'une nouvelle instruction, la bascule u1 est maintenue à 0, la nouvelle instruction est chargée dans le registre INST-CY1 et la bascule u0 est maintenue à 1.

Compte tenu des indications précédentes, la réalisation du circuit 25 ne présente aucune difficulté pour l'homme du métier. Il est donc inutile de la décrire en détail. Il convient seulement de préciser que le démarrage effectif d'une instruction est déterminé en fonction des signaux ST et SQ qui vont être définie plus précisément.

Le circuit de commande du tampon d'instruction des autres unités est conçu de façon analogue :
   - maintien en l'état du tampon si aucune nouvelle instruction n'est envoyée et si l'unité ne démarre aucune instruction ;
   - sinon, progression du tampon ;

- si une nouvelle instruction est envoyée, celle-ci est chargée dans le tampon s'il n'est pas plein et il y a progression du tampon si l'unité entame l'exécution d'une nouvelle instruction.

La figure 10 représente un mode de réalisation du circuit 26 de commande d'instructions pouvant être utilisé dans une unité susceptible d'exécuter des instructions en mode anticipé.

Le circuit 26 reçoit d'abord les signaux internes ST, AN, ARG obtenus après décodage 13 de la microinstruction MW. Le circuit reçoit d'autre part des signaux externes provenant des autres unités ou de l'antémémoire. Les signaux END2 et END3 sont respectivement les signaux de fin d'instruction des deux autres unités U2, U3. Le signal CD-END est utilisé dans le cas où on prévoit la possibilité de fin conditionnelle du microprogramme d'une instruction dans une unité. Ce mécanisme de fin conditionnelle est utilisé lorsqu'une unité entame l'exécution de la dernière microinstruction alors que cette microinstruction ne sera complètement exécutée qu'après une opération effectuée par l'antémémoire. Deux cas ici sont envisagés : l'antémémoire doit prendre en compte un résultat ou bien elle doit envoyer un opérande. L'exécution effective de ces opérations est signalée respectivement par la réception du signal GET ou du signal SEND envoyé par l'antémémoire.

Le circuit 26 reçoit enfin le signal BRVA fournit par l'unité qui effectue les calculs de branchement.

Le circuit 26 fournit en sortie deux signaux d'inhibition NOEX-ST et NOEX-ANT qui sont appliqués au circuit d'inhibition 15. Le circuit 26 représenté à la figure 10 correspond à une réalisation simplifiée où l'unité ne peut anticiper que d'une instruction. Nous verrons ultérieurement les modifications à apporter pour augmenter le nombre d'instructions exécutées de façon anticipée.

Le circuit 26 comporte une bascule BAN dont l'état ANT est indicatif de l'état anticipé ou non de l'unité. On convient par exemple que ANT = 0 signifie que l'unité n'est pas en anticipé, c'est-à-dire qu'elle est en train d'exécuter la même instruction que les autres unités. Inversement, si ANT = 1 l'unité a déjà démarré l'instruction alors que l'instruction précédente est encore en cours d'exécution dans au moins une autre unité.

En fonction de cet indicateur d'état anticipé ANT et de l'indication ST de fin de microinstruction, la porte OU 32 fournit le signal de fin de microprogramme END1 selon l'équation logique :

$$END1 = ANT + ST$$

Les signaux END2 et END3 sont élaborés de façon analogue dans les autres unités et bien entendu, pour une unité U2 ne pouvant pas fonctionner en anticipé, on a toujours :

$$END2 = ST$$

En fonction des signaux de fin de microprogramme ST, du signal de fin conditionnelle CD-END et des signaux SEND et GET émis par l'antémémoire, le circuit de détection de fin d'instruction 27 délivre le signal de fin d'instruction SYN-END vérifiant l'équation :

$$SYN - END = END1.END2.END3.[(CD - END) * + SEND + GET]$$

En fonction de l'indicateur de branchement ARG et du signal de branchement valide BRVA, le circuit 28 fournit un signal SQ d'exécution en séquence des instructions ayant la signification suivante :

- si SQ = 1, la condition de branchement n'est pas satisfaite, ce qui signifie que le programme se déroule en séquences et par conséquent que l'instruction suivante est la première instruction en attente dans le tampon d'instructions. Ceci est aussi le cas lorsqu'il ne s'agit pas d'une instruction de branchement ;
- si SQ = 0, il y a rupture de séquences, ce qui implique que l'instruction de branchement qui vient d'être exécutée n'est pas terminée car l'unité d'adressage EAD doit poursuivre son microprogramme pour calculer l'adresse de l'instruction suivante.

Le circuit 29 de détection de fin effective d'instruction fournit en fonction des signaux ST, SYN-END, SQ, u0, ANT un signal de fin effective d'instruction EFF-END selon l'équation logique suivante :

$$EFF - END = (SYN - END).(ANT + SQ.ST.u0)$$

Le signal EFF-END ainsi que les signaux AN et ST sont verrouillés en phase 1 dans des bascules correspondantes. Les sorties de ces bascules ainsi que le signal NOEX* sont appliqués à l'entrée d'un circuit 31 de commande de la bascule BAN. Le circuit 31 fournit les signaux SAN et RAN commandant respectivement la mise à 1 et la mise à 0 de la bascule BAN. Les signaux de commande de la bascule BAN vérifient les équations suivantes :

$$SAN = ST.AN.NOEX * .(EFF - END) *$$
$$RAN = (ST.AN.NOEX * ) * .(EFF - END) *$$

Un circuit d'anticipation 30 reçoit les signaux ST, AN, SYN-END, SQ, ANT, u0 et fournit deux signaux de non exécution NOEX-ST et NOEX-ANT vérifiant les équations logiques suivantes :

$$NOEX - ST = ST.AN * .[ANT + (SYN - END) * + SQ.u0 * ] + ST.AN.u0 *$$
$$NOEX - ANT = ANT.(SYN - END) *$$

L'équation NOEX-ST montre que le dernier cycle d'une instruction peut ne pas s'exécuter si l'instruction suivante n'est pas présente dans le registre INST-CY0 (cas où u0 = 0).

La réalisation au moyen de circuits logiques et le fonctionnement du circuit 26 se déduisent aisément des équations précédentes. Il peut être néanmoins utile de donner quelques explications sur la signification des signaux intermédiaires produits par ce circuit. Le signal SYN-END informe l'unité que trois microprogrammes exécutés dans les trois unités sont prêts à se terminer ou sont déjà terminés sous réserve, dans le cas d'une instruction de branchement, qu'un déroutement ne se produise pas.

Le signal de fin effective d'instruction EFF-END indique que l'instruction suivante a déjà commencé (ANT = 1) ou qu'elle va s'exécuter car elle est présente dans le tampon d'instructions (SQ.ST.u0 = 1).

La condition de non-exécution NOEX-ST empêche l'exécution de l'instruction en attente dans les cas suivants :

- l'instruction suivante n'est pas exécutable de façon anticipée (ST.AN* = 1) et l'unité se trouve en état anticipé (ANT = 1) ou bien les trois microprogrammes de l'instruction précédente ne sont pas terminés (SYN-END = 0) ou bien il n'y a pas déroulement et l'instruction en attente dans le tampon d'instructions n'est pas valide (SQ.u0* = 1) ;

- l'instruction suivante est exécutable de façon anticipée (ST.AN = 1) et l'instruction en attente dans le tampon d'instructions n'est pas valide (u0 = 0).

La condition de non exécution NOEX-ANT correspond au cas où l'unité est déjà en anticipé (ANT = 1) alors que les microprogrammes d'une instruction ne se terminent pas simultanément dans les unités (SYN-END = 0).

pour permettre à une unité d'anticiper de plusieurs instructions, la bascule BAN doit être remplacée par un circuit comprenant un moyen de comptage tel qu'un compteur-décompteur CAN synchronisé par CK2 et incrémenté par le signal SAN et décrémenté par le signal RAN. La sortie du compteur CAN est reliée d'une part à un détecteur d'état 0 du compteur fournissant l'indicateur d'état anticipé ANT et d'autre part à un détecteur de compte maximal fournissant un signal MAN indiquant que l'état du compteur a atteint un nombre déterminé. Le signal NOEX-ANT devra alors vérifier l'équation suivante :

$$NOEX - ANT = MAN.(SYN - END) *$$

La figure 11 représente un circuit spécifique de l'unité d'adressage EAD. Ce circuit est destiné à résoudre les problèmes de dépendance entre une instruction dont l'exécution peut commencer à s'exécuter dans l'unité d'adressage mais qui pourrait utiliser des informations non encore disponibles. Cette situation se produit dans les cas suivants :

- l'instruction implique une lecture (par exemple d'instructions) dans l'antémémoire (IIR) alors que l'antémémoire n'est pas libre (BUSY = 1) ;

- l'instruction est une instruction de branchement conditionnel et va s'exécuter de façon anticipée ;

- l'instruction implique la lecture d'un registre susceptible d'être modifié par une instruction précédente.

L'état d'occupation de l'antémémoire alors qu'une lecture dans celle-ci doit être effectuée est signalé d'une part par le signal d'occupation BUSY fourni par l'antémémoire par l'intermédiaire d'une des lignes de contrôle CD-AD et d'autre part par un signal IIR ou IOR obtenu par décodage de l'instruction dans l'unité. Ce signal correspond soit à une commande de lecture d'instruction IIR ou d'opérande IOR. De même la présence d'une instruction de branchement conditionnel est signalée par le signal BC obtenu par décodage de l'instruction.

Les cas de dépendance au niveau des registres sont traités au moyen d'un circuit 3D de détection de lecture ou d'écriture d'un registre. Selon le code opératoire de l'instruction contenue dans le registre INST-CY1, le circuit 3D détecte si cette instruction implique une lecture ou une écriture d'un registre déterminé. S'il s'agit d'une lecture, le circuit 3D extrait de l'instruction l'identité du registre et la charge dans le registre GR-PTR. S'il s'agit d'une écriture, l'identité du registre est chargée dans le registre GR-DEST. Par ailleurs, lorsqu'une instruction implique l'écriture dans un registre, cette information est codée dans la dernière microinstruction du microprogramme correspondant dans EAD et le décodeur 13 fournit un signal WGR correspondant.

Un premier cas de dépendance est celui où le microprogramme d'une instruction impliquant l'écriture d'un registre se termine (WGR = 1) alors que l'instruction suivante exécutée en anticipé implique la lecture du même registre (GR-DEST = GR-PTR). Cette situation est détectée par le comparateur 37 qui délivre alors le signal DGRA.

Un autre cas de dépendance est celui où le registre GR-PTR coïncide avec l'identité RES-DEST d'un registre dont la mise à jour dans l'unité va être effectuée au cycle suivant. Ce cas est détecté par le comparateur 36 qui fournit le signal DGR.

Les signaux IIR, BC, DGRA, DGR qui viennent d'être définis et les signaux ST, AN, BUSY, ANT, SYN-END ainsi que l'état d'une bascule REDO, qui sera définie ultérieurement, sont appliqués à l'entrée d'un circuit logique 35 de détection de dépendance fournissant le signal de dépendance NOEX-CY1 vérifiant l'équation logique suivante :

$$NOEX - CY1 = BUSY.IIR + (ST + RE-$$
$$DO).DGR + ST.AN.[ANT + (SYN -$$
$$END) * ].REDO * .$$
$$(DGRA + BC) + REDO.ANT.(SYN - END) *$$

La réalisation pratique du circuit logique 35 est tout à fait classique et ne sera donc pas décrite en détail.

Le signal de dépendance NOEX-CY1 ainsi que les signaux ST et SQ sont verrouillés en phase 1 dans des bascules correspondantes. Les signaux ST et SQ fournissent par l'intermédiaire d'une porte ET 38 le signal STeff signalant que l'instruction en attente dans le registre INST-CY1 est bien l'instruction suivante et que le microprogramme de l'instruction en cours dans l'unité se termine.

Une bascule REDO synchronisée par CK2 reçoit en entrée le signal fourni par un circuit logique 34. La sortie de la bascule REDO est reliée d'une part à une entrée du circuit d'inhibition 15 et d'autre part à l'entrée d'une bascule REDO-1 verrouillée en phase 1. Le circuit 34 reçoit en entrée les signaux NOEX-CY1, STeff et NOEX* ainsi que le signal de sortie de la bascule REDO-1. Il reçoit également des signaux EXCP et TRAP d'interruption du programme en cours. Le circuit 34 fournit en sortie un signal logique définissant le nouvel état de la bascule REDO conformément à l'équation suivante :

$$REDO = (NOEX - CY1).[STeff.NOEX * + (REDO - 1).TRAP * .EXCP * ]$$

Ici aussi, la réalisation du circuit logique 34 ne nécessite pas d'explications particulières.

Le circuit de la figure 11 fonctionne de la façon suivante. Lorsqu'une condition de dépendance potentielle est détectée par l'un des signaux BUSY, BC, DGRA, DGR et que cette dépendance est confirmée par les signaux IIR, ST, REDO, AN, ANT et SYN-END, le circuit 35 délivre le signal de dépendance NOEX-CY1 forçant à 1 la bascule REDO dès que la première microinstruction de l'instruction concernée est chargée dans le registre MW. Tant que!a bascule REDO est à 1, le circuit d'inhibition 15 maintient l'unité en état de non-exécution et cette situation persiste tant que le signal de dépendance NOEX-CY1 reste à 1 sous réserve qu'aucune interruption du programme ne survienne. Dès que NOEX-CY1 repasse à 0, la bascule REDO est remise à 0 à la phase suivante.

Bien entendu, les divers aspects de réalisation de l'invention qui viennent d'être décrits pourraient faire l'objet de multiple variantes par l'emploi de moyens équivalents.

## Revendications

1. Processeur pour système de traitement de données comportant une pluralité d'unités de traitement microprogrammées (EAD, BDP, FPP) se répartissant l'ensemble des fonctions dudit processeur, chaque unité étant affectée à l'exécution d'un sous-ensemble de fonctions dudit processeur, lesdites unités étant reliées à des moyens de mémorisation (CA) contenant les instructions des programmes à exécuter et les opérandes, l'une au moins desdites unités étant une unité d'adressage (EAD) desdits moyens de mémorisation (CA) pour l'obtention des instructions et des opérandes, lesdites unités (EAD, BDP, FPP) comportant leur propre bloc de commande (1) pour l'exécution de microprogrammes spécifiques, ledit processeur étant caractérisé en ce que chaque instruction est composée de plusieurs microprogrammes exécutables respectivement dans lesdites unités, en ce que le bloc de commande (1) de chaque unité comporte des moyens (26, 15, 33) de commande d'instructions pour déclencher l'exécution du microprogramme de la première instruction en attente, en ce que la dernière microinstruction de chacun desdits microprogrammes comporte une indication (ST) de fin de microprogramme, en ce que certaines unités et notamment l'unité d'adressage comportent des moyens d'anticipation (30) et contiennent des microprogrammes dont la dernière microinstruction comporte une indication d'anticipation (AN) pour signaler si l'instruction suivante à exécuter est anticipable et en ce que les moyens d'anticipation (30) conditionnent lesdits moyens de commande (26, 15, 33) pour autoriser l'exécution du microprogramme de ladite instruction en attente lorsque la microinstruction en cours d'exécution comporte lesdites indications (ST, AN) de fin de microprogramme et d'anticipation.

2. Processeur selon la revendication 1, caractérisé en ce qu'il comprend des moyens (CD-INST, 32) permettant auxdites unités de s'échanger des signaux de fin de microprogramme (END1, END2, END3) en réponse auxdites indications de fin de microprogramme (ST), en ce que chaque unité comprend un circuit de détection de fin d'instruction (27) fournissant un signal de fin d'instruction (SYN-END) en fonction desdits signaux de fin de microprogramme (END1, END2, END3), en ce que chaque unité comprend un circuit d'inhibition (15) qui, lorsqu'il est dans son état actif, empêche toute modification de l'état logique de l'unité, en ce que ledit circuit d'inhibition (15) est notamment rendu actif lorsque les conditions suivantes sont réunies :
   - l'indication d'anticipation (AN) est absente,
   - l'indication de fin de microprogramme (ST) est présente,
   - le signal de fin d'instruction est absent,
   l'instruction en attente étant alors dite "exécutable" si l'indication de fin de microprogramme (ST) est présente alors que le circuit d'inhibition (15) est inactif.

3. Processeur selon la revendication 2, caractérisé en ce que chaque unité munie de moyens d'anticipation (30) comporte un indicateur d'état anticipé (ANT) prenant initialement une première valeur déterminée et signalant pour une deuxième valeur déterminée que l'instruction en cours dans ladite unité est exécutée en anticipé, c'est-à-dire que son exécution a démarré avant la fin de l'instruction précédente, en ce que lesdites unités comportent un circuit détecteur de fin effective d'instruction (29) fournissant un signal de fin effective d'instruction (EFF-END) lorsque les conditions suivantes sont réunies :

- le signal de fin d'instruction (SYN-END) est présent,
- ladite unité est dans un état anticipé (ANT) ou bien l'instruction en attente dans ladite unité est l'instruction suivante à exécuter,

en ce que ledit indicateur d'état anticipé (ANT) est placé à ladite deuxième valeur déterminée lorsque les conditions suivantes sont réunies :

- l'instruction en attente est exécutable,
- l'indication d'anticipation (AN) est présente,
- le signal de fin effective d'instruction (EFF-END) est absent,

et en ce que le circuit d'inhibition (15) est rendu actif lorsque les conditions suivantes sont remplies simultanément :

- l'indication de fin de microprogramme (ST) est présente,
- l'indication d'anticipation (AN) est absente,
- l'indicateur d'état anticipé (ANT) possède ladite seconde valeur déterminée.

4. Processeur selon la revendication 3, caractérisé en ce que lesdites première et seconde valeurs déterminées dudit indicateur (ANT) correspondent respectivement à un premier et un second état d'une bascule (BAN), en ce que ladite bascule (BAN) est replacée à son premier état lorsque ledit signal de fin effective d'instruction (EFF-END) est présent alors que soit l'instruction suivante n'est pas anticipable, soit l'instruction en attente n'est pas exécutable, et en ce que les moyens d'inhibition (15) sont rendus actifs lorsque ladite bascule (BAN) est dans son second état alors que le signal de fin d'instruction (SYN-END) est absent.

5. Processeur selon la revendication 3, caractérisé en ce que chaque unité munie de moyens d'anticipation (30) comporte un dispositif de comptage (CAN) du nombre d'instructions exécutées en anticipé dans ladite unité, en ce que lesdites première et seconde valeurs déterminées dudit indicateur d'état anticipé (ANT) correspondent respectivement à une valeur initiale du dispositif (AN) de comptage et à une valeur différente de cette valeur initiale et en ce que lesdits moyens d'inhibition (15) sont rendus actifs lorsque ledit nombre atteint une valeur déterminée alors que le signal (SYN-END) de fin d'instruction est absent.

6. Processeur selon la revendication 5, caractérisé en ce que le dispositif de comptage est incrémenté de 1 lorsque les conditions suivantes sont réunies :

- l'instruction en attente est exécutable,
- l'indication d'anticipation (AN) est présente,
- le signal de fin effective d'instruction (EFF-END) est absent,

et en ce que le dispositif de comptage (CAN) est décrémenté de 1 lorsque le signal de fin effective d'instruction (EFF-END) est présent alors que soit l'instruction suivante n'est pas exécutable en anticipé, soit l'instruction en attente n'est pas exécutable.

7. processeur selon l'une des revendications 2 à 6, caractérisé en ce que l'unité d'adressage (EAD) comporte des circuits de détection de dépendance (35, 36, 37) fournissant un signal de dépendance (NOEX-CY1) lorsque l'instruction en attente doit utiliser des informations susceptibles d'être modifiées par une instruction qui n'est pas encore terminée dans au moins une des unités autre que l'unité d'adressage, en ce que ledit signal de dépendance (NOEX-CY1) conditionne l'activation du circuit d'inhibition (15), et en ce que l'activation du circuit d'inhibition (15) est supprimée lorsque ledit signal de dépendance (NOEX-CY1) disparaît.

8. Processeur selon la revendication 7, caractérisé en ce que les conditions de branchement d'une instruction de branchement conditionnelle étant calculées par une unité autre que l'unité d'adressage, ledit signal de dépendance (NOEX-CY1) est produit par la détection que l'instruction en attente est une instruction de branchement conditionnelle alors que les conditions pour que cette instruction soit exécutée en anticipé sont satisfaites.

9. Processeur selon l'une des revendications 7 ou 8, caractérisé en ce que certains registres (BR, GR) de l'unité d'adressage (EAD) étant susceptibles d'être modifiés par des unités autres que l'unité d'adressage, ledit signal de dépendance (NOEX-CY1) est produit par la détection que l'instruction en attente implique la lecture d'un desdits registres alors que son contenu modifiable par une instruction non encore terminée n'a pas été reçu dans ladite unité d'adressage (EAD).

10. Processeur selon l'une des revendications 7 à 9, caractérisé en ce que l'activation du circuit d'inhibition (15) est commandée par un premier état d'une bascule (REDO), en ce que ladite bascule est placée à son premier état déterminé lorsque les conditions suivantes sont réunies :

- le signal de dépendance (NOEX-CY1) est présent,
- l'indicateur de fin de microprogramme (ST) est présent,
- l'instruction en attente est l'instruction suivante et elle est exécutable,

et en ce que ladite bascule (REDO) est replacée dans un deuxième état lorsque ledit signal de dépendance (NOEX-CY1) a disparu ou bien en cas d'interruption de l'exécution du programme en cours.

## Patentansprüche

1. Prozessor für ein Datenverarbeitungssystem mit mehreren mikroprogrammierten Verarbeitungseinheiten (EAD, BDP, FPP), auf die die Gesamtheit der Funktionen des Prozessors aufgeteilt ist, wobei jede Einheit für die Ausführung einer Untergruppe von Funktionen des Prozessors bestimmt ist, die Einheiten mit Speichermitteln (CA) verbunden sind, die die Befehle der auszuführenden Programme und die Operanden enthalten, wenigstens eine der Einheiten eine Adressiereinheit (EAD) zum Adressieren der Speichermittel (CA) ist, um die Befehle und Operanden zu erhalten, und wobei die Einheiten (EAD, BDP, FPP) ihren eigenen Steuerblock (1) für die Ausführung der entsprechenden Mikroprogramme enthalten, dadurch gekennzeichnet, daß jeder Befehl aus mehreren in den jeweiligen Einheiten ausführbaren Mikroprogrammen zusammengesetzt ist, daß der Steuerblock (1) einer jeden Einheit Befehlssteuermittel (26, 15, 33) enthält, um die Ausführung des Mikroprogramms des ersten bereitstehenden Befehls einzuleiten, daß der letzte Mikrobefehl eines jeden Mikroprogramms einen Mikroprogrammende-Hinweis (ST) enthält, daß bestimmte Einheiten und insbesondere die Adressiereinheit Vorausnahmemittel (30) aufweisen und Mikroprogramme enthalten, deren letzter Mikrobefehl einen Vorausnahmehinweis (AN) enthält, um anzuzeigen, ob der folgende auszuführende Befehl vorzeitig ausgeführt werden kann, und daß die Vorausnahmemittel (30) die Steuermittel (26, 15, 33) konditionieren, um die Ausführung des Mikroprogramms des letzten bereitstehenden Befehls zu gestatten, wenn der gerade ausgeführte Mikrobefehl die Mikroprogrammende- und Vorausnahme-Hinweise (ST, AN) enthält.

2. Prozessor nach Anspruch 1, dadurch gekennzeichnet, daß er Mittel (CD-INST, 32) enthält, die es den Einheiten gestatten, auf die Mikroprogrammende-Hinweise (ST) hin untereinander Mikroprogrammende-Signale (END1, END2, END3) auszutauschen, und daß jede Einheit einen Befehlsende-Erfassungskreis (27) enthält, der in Abhängigkeit von den Mikroprogrammende-Signalen (END1, END2, END3) ein Befehlsende-Signal (SYN-END) liefert, daß jede Einheit einen Verhinderungskreis (15) enthält, der in seinem aktiven Zustand jede Änderung des logischen Zustands der Einheit verhindert, und daß der Verhinderungskreis (15) insbesondere dann in den aktiven Zustand versetzt wird, wenn gleichzeitig die folgenden Bedingungen erfüllt sind:
   - der Vorausnahmehinweis (AN) fehlt,
   - der Mikroprogrammende-Hinweis (ST) liegt vor,
   - das Befehlsende-Signal fehlt,
wobei der bereitstehende Befehl jetzt als "ausführbar" bezeichnet wird, wenn der Mikroprogrammende-Hinweis (ST) vorliegt, während der Verhinderungskreis (15) inaktiv ist.

3. Prozessor nach Anspruch 2, dadurch gekennzeichnet, daß jede mit Vorausnahmemitteln (30) versehene Einheit einen Indikator (ANT) für einen vorausgenommenen Zustand enthält, der anfänglich einen ersten bestimmten Wert annimmt und bei einem zweiten bestimmten Wert anzeigt, daß der in der Einheit gerade ausgeführte Befehl vorzeitig ausgeführt wird, d.h. daß mit seiner Ausführung vor dem Ende des vorhergehenden Befehls begonnen wurde, daß die Einheiten einen Detektorkreis (29) zum Erfassen des tatsächlichen Befehlsendes enthalten, der ein Signal (EFF-END) für das tatsächliche Befehlsende liefert, wenn gleichzeitig die folgenden Bedingungen erfüllt sind:
   - das Befehlsende-Signal (SYN-END) liegt vor,
   - die Einheit befindet sich in einem vorausgenommenen Zustand (ANT), oder der in dieser Einheit bereitstehende Befehl ist der folgende auszuführende Befehl,
daß der Indikator (ANT) für den vorausgenommenen Zustand auf den zweiten bestimmten Wert gesetzt wird, wenn gleichzeitig die folgenden Bedingungen erfüllt sind:
   - der bereitstehende Befehl ist ausführbar,
   - der Vorausnahmehinweis (AN) liegt vor,
   - das Signal (EFF-END) für das tatsächliche Befehlsende fehlt,
und daß der Verhinderungskreis (15) in den aktiven Zustand versetzt wird, wenn gleichzeitig die folgenden Bedingungen erfüllt sind:
   - der Mikroprogrammende-Hinweis (ST) liegt vor,
   - der Vorausnahmehinweis (AN) fehlt,
   - der Indikator (ANT) für den vorausgenommenen Zustand weist den zweiten bestimmten Wert auf.

4. Prozessor nach Anspruch 3, dadurch gekennzeichnet, daß der erste und der zweite bestimmte Wert des Indikators (ANT) einem ersten bzw. einem zweiten Zustand einer Kippschaltung (BAN) entspricht, daß die Kippschaltung (BAN) in ihren ersten Zustand zurückgesetzt wird, wenn das Signal (EFF-END) für das tatsächliche Befehlsende vorliegt, während entweder der folgende Befehl nicht vorzeitig ausführbar ist oder der bereitstehende Befehl nicht ausführbar ist, und daß die Verhinderungsmittel (15) in den aktiven Zustand versetzt werden, wenn die Kippschaltung (BAN) ihren zweiten Zustand aufweist, während das Befehlsende-Signal (SYN-END) fehlt.

5. Prozessor nach Anspruch 3, dadurch gekennzeichnet, daß jede mit Vorausnahmemitteln (30) versehene Einheit eine Zähleinrichtung (CAN) zum Zählen der Anzahl von in der Einheit vorzeitig ausgeführten Befehlen enthält, daß der erste und der zweite bestimmte Wert des Indikators (ANT) für den vorausgenommenen Zustand einem anfänglichen Wert der Zähleinrichtung (CAN) bzw. einem von diesem anfänglichen Wert verschiedenen Wert entspricht und daß die Verhinderungsmittel (15) in den aktiven Zustand versetzt werden, wenn die Anzahl einen bestimmten Wert erreicht, während das Befehlsende-Signal (SYN-END) fehlt.

6. Prozessor nach Anspruch 5, dadurch gekennzeichnet, daß die Zähleinrichtung schrittweise um 1 erhöht wird, wenn gleichzeitig die folgenden Bedingungen erfüllt sind:
   - der bereitstehende Befehl ist ausführbar,
   - der Vorausnahmehinweis (AN) liegt vor,
   - das Signal (EFF-END) für das tatsächliche Befehlsende fehlt,
   und daß die Zähleinrichtung (CAN) schrittweise um 1 erniedrigt wird, wenn das Signal (EFF-END) für das tatsächliche Befehlsende vorliegt, während entweder der folgende Befehl nicht vorzeitig ausführbar ist oder der bereitstehende Befehl nicht ausführbar ist.

7. Prozessor nach einem der Ansprüche 2 bis 6, dadurch gekennzeichnet, daß die Adressiereinheit (EAD) Abhängigkeitserfassungskreise (35, 36, 37) enthält, die ein Abhängigkeitssignal (NOEX-CY1) liefern, wenn für den bereitstehenden Befehl Informationen verwendet werden müssen, die durch einen noch' nicht bestimmten Befehl in wenigstens einer von der Adressiereinheit verschiedenen Einheit geändert werden können, daß das Abhängigkeitssignal (NOEX-CY1) die Aktivierung der Verhinderungsschaltung (15) konditioniert und daß die Aktivierung der Verhinderungsschaltung (15) unterdrückt wird, wenn das Abhängigkeitssignal (NOEX-CY1) verschwindet.

8. Prozessor nach Anspruch 7, dadurch gekennzeichnet, daß dann, wenn die Verzweigungsbedingungen eines bedingten Verzweigungsbefehls durch eine andere Einheit als die Adressiereinheit berechnet werden, das Abhängigkeitssignal (NOEX-CY1) erzeugt wird, wenn festgestellt wird, daß der bereitstehende Befehl ein bedingter Verzweigungsbefehl ist, während die Bedingungen dafür, daß dieser Befehl vorzeitig ausgeführt wird, erfüllt sind.

9. Prozessor nach Anspruch 7 oder 8, dadurch gekennzeichnet, daß dann, wenn bestimmte Register (BR, GR) der Adressiereinheit (EAD) durch andere Einheiten als die Adressiereinheit geändert werden können, das Abhängigkeitssignal (NOEX-CY1) erzeugt wird, wenn festgestellt wird, daß der bereitstehende Befehl das Lesen eines der Register mit sich bringt, während dessen Inhalt, der durch einen noch nicht bestimmten Befehl geändert werden kann, nicht in der Adressiereinheit (EAD) empfangen wurde.

10. Prozessor nach einem der Ansprüche 7 bis 9, dadurch gekennzeichnet, daß die Aktivierung des Verhinderungskreises (15) durch einen ersten Zustand einer Kippschaltung (REDO) gesteuert wird, daß die Kippschaltung in ihren ersten bestimmten Zustand versetzt wird, wenn gleichzeitig die folgenden Bedingungen erfüllt sind:
   - das Abhängigkeitssignal (NOEX-CY1) liegt vor,
   - der Mikroprogrammende-Hinweis (ST) liegt vor,
   - der bereitstehende Befehl ist der folgende Befehl, und er ist ausführbar,
   und daß die Kippschaltung (REDO) in einen zweiten Zustand zurücksetzbar ist, wenn das Abhängigkeitssignal (NOEX-CY1) verschwunden ist oder eine Unterbrechung der Ausführung des laufenden Programms auftritt.

## Claims

1. A processor for a data processing system comprising a plurality of microprogrammed processing units (EAD, BDP, FPP), sharing the set of functions of said processor, each unit being assigned to execute a subset of functions of said processor, said units being connected to memory means (CA) containing program instructions to be executed and the operands, at least one of said units being an addressing unit (EAD) for addressing said memory means (CA) for obtaining the instructions and operands, said units (EAD, BDP, FPP) each comprising a command block (1) for the execution of specific microprograms, characterized in that each instruction is composed of several microprograms that can be executed respectively in said units, in that the command block (1) of each unit comprises means (26, 15, 33) for commanding instructions to trigger the execution of the microprogram of the first instruction in standby, in that the last microinstruction of each of said microprograms comprises an end-of-microprogram indication (ST), in that certain units and notably the addressing unit comprises anticipation means (30) and contains the microprograms, the last microinstruction of which comprises an anticipation indication (AN) to signal whether the next instruction to be executed can be anticipated and in that the anticipation means (30) condition said command means (26, 15, 33) to authorize the execution of the microprogram of said instruction in standby when the microinstruction in the course of execution comprises said end-of-microprogram and anticipation indications (ST, AN).

2. A processor according to claim 1, characterized in that it includes means (CD-INST, 32) for enabling said units to exchange end-of-microprogram signals (END1, END2, END3) in response to said end-of-microprogram indications (ST), in that each unit includes an end-of-instruction detection circuit (27) furnishing an end-of-instruction signal (SYN-END) as a function of said end-of-microprogram signals (END1, END2, END3), in that each unit includes an inhibition circuit (15) which when it is in its active state prevents any modification of the logic state of the unit, in that said inhibition circuit (15) is notably made active when the following conditions are met:
 - the anticipation indication (AN) is absent,
 - the end-of-microprogram indication (ST) is present,
 - the end-of-instruction signal is absent,
 the instruction in standby then being called "executable" if the end-of-microprogram indication (ST) is present while said inhibition circuit (15) is inactive.

3. A processor according to claim 2, characterized in that each unit provided with anticipation means (30) comprises an anticipated state indicator (ANT) initially assuming a first predetermined value, and signalling by a second predetermined value that the instruction in progress in said unit is executed in anticipation, that is, its execution has begun before the end of the previous instruction, in that said units comprise an effective-end-of-instruction detector circuit (29), furnishing an effective-end-of-instruction signal (EFF-END) when the following conditions are met:-
 - the end-of-instruction signal (SYN-END) is present,
 - said unit is in an anticipated state (ANT) or the instruction in standby in said unit is the next instruction to be executed,
 in that said anticipated state indicator (ANT) is put at said predetermined second value when the following conditions are met:
 - the instruction in standby is executable,
 - the anticipation indication (AN) is present,
 - the effective-end-of-instruction signal (EFF-END) is absent,
 and in that the inhibition circuit (15) is made active when the following conditions are met:
 - the end-of-microprogram indication (ST) is present,
 - the anticipation indication (AN) is absent,
 - the anticipated state indicator (ANT) has said second predetermined value.

4. A processor according to claim 3, characterized in that said first and second predetermined values of said indicator (ANT) correspond to a first and second state, respectively, of a multivibrator (BAN), in that said multivibrator (BAN) is returned to its first state when said effective-end-of-instruction signal (EFF-END) is present while either the next instruction is not anticipatable or the instruction in standby is not executable, and in that the inhibition means (15) are rendered active when said multivibrator (BAN) is in its second state while said end-of-instruction signal (SYN-END) is absent.

5. A processor according to claim 3, characterized in that each unit provided with anticipation means (30) comprises a device for counting (CAN) the number of instructions executed in anticipation by said unit, in that said first and second predetermined values of said anticipated state indicator (ANT) correspond respectively to an initial value of the device for counting (AN) and a different value from said initial value and in that said inhibition means (15) are rendered active when said number attains a predetermined value while said end-of-instruction signal (SYN-END) is absent.

6. A processor according to claim 5, charcterized in that the device for counting is incremented by 1 when the following conditions are met:
 - the instruction in standby is executable,
 - the anticipation indication (AN) is present,
 - the effective-end-of-instruction signal (EFF-END) is absent,
 and in that the device for counting (CAN) is decremented by 1 when the effective-end-of-instruction signal (EFF-END) is present while either the next instruction is not executable in anticipation or the instruction in standby is not executable.

7. A processor according to any one of claims 2 to 6, characterized in that the unit (EAD) comprises dependency detection circuits (35, 36, 37) for furnishing a dependency signal (NOEX-CY1) when the instruction in standby must use information capable of being modified by an instruction that has not yet been completed in at least one of the units other than the addressing unit, in that said dependency signal (NOEX-CY1) conditions the activation of said inhibition circuit (15) and in that the activation of said inhibition circuit (15) is cancelled when said dependency signal (NOEX-CY1) disappears.

8. A processor according to claim 7, characterized in that, the conditions of a conditional transfer instruction being calculated by a unit other than the addressing unit, said dependency signal (NOEX-CY1) is produced by detecting that an instruction in standby is a conditional transfer instruction while the conditions for executing this instruction in anticipation are satisfied.

9. A processor according to claim 7 or 8, characterized in that certain registers (BR, GR) of the addressing unit (EAD) being capable of being modified by units other than the addressing unit, said dependency signal (NOEX-CY1) is produced by detecting that the instruction in standby involves the reading of one of said registers while its contents, modifiable by an instruction not yet completed, have not been received in said addressing unit (EAD).

10. A processor according to one of claims 7 to 9, characterized in that the activation of the inhibition circuit (15) is commanded by a first state of a multivibrator (REDO), in that said multivibrator is placed in its first predetermined state when the following conditions are met:
   - the dependency signal (NOEX-CY1) is present,
   - the end-of-microprogram indicator (ST) is present,
   - the instruction in standby is the next instruction and it is executable,
      and in that said multivibrator (REDO) is placed in a second state when said dependency signal (NOEX-CY1) has disappeared, or in the event of interruption of the execution of a program in progress.

# FIG.1

FIG. 2

# FIG. 3

FIG. 4

FIG. 5

FIG. 7

EP 0 435 718 B1

# FIG. 6

# FIG. 8

FIG. 9

FIG. 10

FIG. 11